# EUROPEAN PATENT APPLICATION

(11) **EP 2 532 628 A1**
(43) Veröffentlichungstag der Anmeldung: **12.12.2012**
(21) Anmeldenummer: 10835375.6
(22) Anmeldetag: 10.12.2010
(51) Int. Cl.: C03C 3/087

(54) **ALUMINIUMSILIKATGLAS FÜR BERÜHRUNGSBILDSCHIRM**

(30) Priorität: 11.12.2009 CN 200910253263
(71) Anmelder: Schott AG, 55122 Mainz (DE); Schott Glass Technologies (Suzhou) Co. Ltd., Suzhou, Jiangsu 215009 (CN)
(72) Erfinder: WANG, Chong, Jiangsu 215011 (CN); ZIMMER, José, 66679 Losheim am See (DE)
(74) Vertreter: Herden, Andreas F.
(86) Internationale Anmeldenummer: PCT/CN2010/002010
(87) Internationale Veröffentlichungsnummer: WO 2011/069338

(57) **Zusammenfassung**

Die vorliegende Erfindung betrifft ein Aluminosilikatglas für Touchscreens, wobei das Glas aus den folgenden Komponenten besteht, berechnet auf der Basis des Gewichtsprozentsatzes: SiO₂, 55 bis 65%; Na₂O, 12 < bis 17% ; Al₂O₃, 15 < bis 20%; K₂O, 2 bis 6% ; MgO, 3,9 bis 10%; ZrO₂, 0 bis 5%; ZnO, 0 bis 4%; CaO, 0 bis 4%; Na₂O + K₂O + MgO + ZnO + CaO, 15 bis 28%; SnO₂, 0 bis 1%; TiO₂ + CeO₂ ≤ 1%; und ein chemisches Verfestigungsverfahren, umfassend Ionenaustauschverfestigung in einem 100% KNO₃-Salzbad, wobei eine Vorheiztemperatur im Bereich von 370°C bis 430°C liegt und die Behandlungszeit 0,5 bis 16 Stunden beträgt. Das Glas der vorliegenden Erfindung kann als ein Substrat und eine Abdeckplatte eines Touchpanel verwendet werden.

## Beschreibung

Die vorliegende Erfindung betrifft ein Aluminosilikatglas. Die vorliegende Erfindung betrifft insbesondere ein Aluminosilikatglas mit hoher Festigkeit, hoher Bruchzähigkeit und hoher Kratzfestigkeit. Die vorliegende Erfindung betrifft insbesondere ein Aluminosilikatglas mit hoher Festigkeit, hoher Bruchzähigkeit und hoher Kratzfestigkeit zur Verwendung als bildschirmschützendes Material von Elektronikgeräten. Ganz besonders betrifft die vorliegende Erfindung ein Aluminosilikatglas mit hoher Festigkeit, hoher Bruchzähigkeit und hoher Kratzfestigkeit für Touchscreens. Die vorliegende Erfindung betrifft insbesondere einen chemischen Verfestigungsprozess eines Aluminosilikatglases.

### Allgemeiner Stand der Technik

Das Problem des Bildschirmschutzes ist mit wachsender Beliebtheit von Elektronikdisplayprodukten wie etwa Plasma-TVs, Flüssigkristall-TVs, Flüssigkristalldisplays, Geldautomaten, Mobiltelefonen, PDAs, persönlichen Unterhaltungsgeräten, Informationssuchmaschinen, Medienwerbeplayers usw. immer mehr in das Blickfeld von Herstellern und Benutzern gerückt worden.

In der Vergangenheit wurde normalerweise eine Schicht einer Schutzabdeckplatte auf der Oberfläche platziert, die hauptsächlich organisches Kristallspiegel- und Kalknatronglas umfasste. Diese Materialien besitzen jedoch keine ausreichenden mechanischen Eigenschaften bezüglich Härte, mechanischer Festigkeit, Oberflächenkratzfestigkeit und Schlagfestigkeit. Insbesondere für Touchscreens wie etwa die Touchscreens von PDAs und Mobiltelefonen, könnten beschädigende und häufige Operationen wie etwa Schreiben, Kratzen und Schlagen auf Touchscreens durch Finger, elektronische Stifte, Kugelschreiber und sogar Schlüssel oft einen Bruch oder eine Oberflächenrauheit für Bildschirme bewirken, was die Lebensdauer und den Displayeffekt der Einrichtungen als Ganzes beeinflusst.

Ein Touchscreen ist ein Display, das eine Berührung in einem Displaybereich detektiert und darauf reagiert, wodurch eine direkte Interaktion mit dem Display ohne Tastaturen, Mauseinrichtungen oder Touchpads verursacht wird. Touchscreens wie etwa resistive Touchscreens, kapazitive Touchscreens oder projektive kapazitive Touchscreens, benötigen ein Glassubstrat zum Abscheiden von transparenten leitenden Oxiden zum Übertragen von Signalen. Insbesondere wird normalerweise eine zusätzliche Glasabdeckung für den Zweck benötigt, das Display zu schützen.

Ein resistiver Touchscreen überträgt Berührungssignale durch eine flexible Oberflächenabdeckplatte, die normalerweise eine Kunststoff- oder Glasplatte ist, die mit einem Film aus transparentem leitendem Oxid (TCO - Transparent Conductive Oxide) beschichtet ist. Das Berühren bewirkt eine Verformung der flexiblen Abdeckplatte und wird zum Kontaktieren des inneren leitenden Substrats geleitet, wodurch der Widerstand und der Strom der Schaltung variiert werden. Dies wird allgemein als ein Berührungsereignis zur Behandlung angesehen. Eine flexible Oberflächenschicht erfordert eine höhere Kratzfestigkeit und Transmissivität insbesondere für Outdooranwendungen. Kunststoffe können den Anforderungen nicht genügen, weshalb eine Scheibe aus Glas mit einer Dicke von etwa 0,1 bis 0,3 mm notwendig ist.

Insbesondere stellt der projektive kapazitive Touchscreen den sich schnell entwickelnden Trend auf dem Markt von Touchscreens dar, da er die Vorteile einer hohen Transmissivität, einer hohen Auflösung und einer langen Lebensdauer aufweist und die Multi-Touch-Technologie unterstützt. Für diese Art von kapazitiven Touchscreens kann Glas als ein Substrat eines beschichteten Films oder einer Abdeckplatte verwendet werden. Der kapazitive Touchscreen reagiert auf eine Fingerberührung durch die Veränderung der Kapazität einer Schaltung, und üblicherweise wird nur ein Glassubstrat mit einer zweiseitigen TCO-Beschichtung benötigt.

Ein Glas als ein Substrat wird mit dem TCO-Film beschichtet. Ein Substratglas ist allgemein ein Kalknatronglas, das mit TCO (Transparent Transmission Coating - Beschichtung mit transparenter Transmission) beschichtet ist. Zwei mit TCO-Filmschichten beschichtete Glasscheiben bilden einen Kondensator durch einen dünnen beabstandeten Raum. Was wichtig ist, ist, dass die obere Glasschicht das Display vor Beschädigung schützt, und somit sind eine hohe Oberflächenkratzfestigkeit und Festigkeit erwünscht.

Außerdem benötigen andere Arten von Touchscreens wie etwa SAW-Touchscreens (Surface Accustic Wave - akustische Oberflächenwellen), optische Touchscreens alle Glasabdeckpaneele oder -substrate mit hoher Transmissivität und hoher Festigkeit.

Das Substrat und die Abdeckplatte in dem Anwendungsgebiet von Touchscreens erfordern, dass ein Glas einer Verfestigung und/oder Härtung des Glases unterzogen werden sollte, um die Festigkeit und die Härte des Glases weiter zu erhöhen. Allgemein soll eine Glasdicke im Bereich von 0,3 mm bis 1,5 mm liegen, wenn eine Anwendung eine Verfestigung erfordert, da das physikalische Tempern sich nur auf ein Glas mit einer Dicke von über 3 mm anwenden lässt. Deshalb ist zum Verfestigen eines Glases mit einer Dicke im Bereich zwischen 0,3 mm und 1,5 mm eine chemische Behandlung erforderlich.

Die Glasoberflächenverfestigungstechnologie beinhaltet nicht nur den allgemeinen Prozess der Lufttemperung (Luftstrahlverfestigung), sondern auch die Technologie des chemischen Temperns. Das Wesen der chemischen Tempertechnologie besteht darin, die Struktur der Glasoberfläche zu ändern, wodurch die Festigkeit der Glasoberfläche vergrößert wird. Das chemische Tempern kann auch als chemische Verfestigung bezeichnet werden.

Die chemische Verfestigung wird im Allgemeinen in 1) alkylierende Behandlung der Glasoberfläche; 2) Plattieren einer Schicht aus glasartigem Material mit einem niedrigen Ausdehnungskoeffizienten auf der Glasoberfläche; 3) Alkalimetallionenaustausch unterteilt. Die hier erwähnte chemische Verfestigung bezieht sich auf eine Ionenaustauschverfestigung. Allgemein gesprochen wird eine Ionenaustauschverfestigung weiterhin durch zwei Prozesse ausgeführt: Hochtemperaturionenaustausch und Niedertemperaturionenaustausch. Außerdem wird die Ionenaustauschverfestigung auch als Ionenaustauschhärtung bezeichnet.

Die Hochtemperaturionenaustauschverfestigung bezieht sich auf das Ausbilden einer abgeänderten Schicht auf der Glasoberfläche mit einem glasartigen Material mit einem niedrigen Ausdehnungskoeffizienten über der Entspannungstemperatur eines Glases. Ein typischer Hochtemperaturionenaustausch besteht in dem Erhitzen eines Glases, das Na₂O und K₂O umfasst, auf eine Temperatur über der Entspannungstemperatur, Imprägnieren des Glases in geschmolzenes Salz umfassend Li⁺ bei einer Temperatur unter der Erweichungstemperatur und Erhitzen des Glases und des geschmolzenen Salzes auf eine Temperatur über der Entspannungstemperatur; das Glas hat zu dieser Zeit ein loses Netzwerk, und die Oberfläche kann leicht verändert werden, wodurch der zwischen dem Glas und dem geschmolzenen Salz auftretende Ionenaustausch zwischen Na⁺ oder K⁺ und Li⁺ gefördert wird. Nach einer Periode des Ionenaustauschs zwischen Li⁺ und Na⁺ oder K⁺ auf der Glasoberfläche wird das Glas zum Ausglühen und Abkühlen auf Raumtemperatur herausgenommen, und dann entsteht eine an Li⁺-Ionen reiche Schicht auf der Glasoberfläche. Da eine Li⁺-Schicht einen Ausdehnungskoeffizienten aufweist, der weit niedriger ist als der einer Ionenschicht, die Na⁺ oder K⁺ umfasst (ein an Natrium und Kalium reiches Glas und ein an Lithium reiches Glas haben unterschiedliche Ausdehnungskoeffizienten), sind die Kontraktionen auf dem Äußeren und in dem Inneren eines Glases während des Abkühlens unterschiedlich. Deshalb wird eine Restdruckfestigkeitsschicht auf der Glasoberfläche ausgebildet, und eine Dehnfestigkeitsschicht wird in dem Glas erzeugt. Falls das Glas Al₂O₃ und TiO₂ umfasst, wird ein TiO₂-Al₂O₃-4SiO₄-Kristall mit einem noch kleineren Ausdehnungskoeffizienten ausgebildet, wenn ein Ionenaustausch stattfindet, und nach dem Abkühlen wird eine extrem große Druckfestigkeit erzeugt. Der Hochtemperaturionenaustausch kann jedoch leicht eine optische Verzerrung verursachen, und das Glas kann sich leicht verformen. Außerdem besitzt geschmolzenes Salz während der Produktion eine hohe Temperatur, erzeugt eine große Menge an flüchtigen Stoffen und verunreinigt die Umgebung. Außerdem ist das geschmolzene Glas leicht anfällig für den Ausfall.

Die Niedertemperaturionenaustauschverfestigung findet breite Anwendung, wobei der Mechanismus das Imprägnieren des Glases in ein geschmolzenes Salz einer Alkalimetallverbindung umfasst, wobei das Ion einen Radius besitzt, der größer ist als der des in dem Glas enthaltenen Alkalimetallions unter einer Temperatur niedriger als die Entspannungstemperatur des Glases. Ionen mit großen Volumina in dem geschmolzenen Salz quetschen sich in Räume, die ursprünglich von Ionen mit kleinen Volumina in dem Glasnetzwerk belegt waren, und Ionen von kleinen Volumina werden in das geschmolzene Glas ausgetauscht. Wenn das Glas abgekühlt wird, schrumpft das Glasnetzwerk. Da Ionen mit größeren Volumina größere Räume erfordern, wird auf der Glasoberfläche eine Druckbeanspruchung erzeugt. Die Oberflächendruckbeanspruchung bleibt innerhalb des Glases bei Abkühlung, und somit entsteht eine kompaktierte komprimierte Schicht auf der Glasoberfläche. Die Anwesenheit einer derartigen komprimierten Schicht kann feine Risse auf der Glasoberfläche mit einer sich auf der Glasoberfläche ausbildenden vorgespannten Schicht reduzieren, wodurch die Biegefestigkeit und die Schlagfestigkeit des Glases enorm vergrößert werden.

Kleinere Ionen in einem Glas werden durch größere Ionen in einem chemischen Salz ausgetauscht, beispielsweise werden kleinere Na⁺-Ionen in einem Glas durch ein größeres K⁺-Ion über das üblicherweise bekannte KNOL₃-Salzbad ausgetauscht.

Zum Zweck des Förderns eines effizienten Ionenaustauschprozesses ist mindestens ein kleineres Alkaliion, insbesondere Li⁺ oder Na⁺, eine unabdingbare Komponente in einem Glas, das gestattet, durch größere Ionen in einem Salz wie etwa KNO₃ ausgetauscht zu werden. Unter den Bedingungen, andere Charaktere nicht zu verlieren, sollte die Menge des Alkaliions so hoch wie möglich sein, um ausreichende Austauschstellen bereitzustellen. Außerdem ist Al₂O₃ auch eine unabdingbare Komponente zum Bereitstellen eines hochfesten Glasmaterials, und was wichtig ist, größere Netzwerke können als Diffusionskanäle zum Aufnehmen von Alkalimetallionen ausgebildet werden, was wiederum zu einem schnellen und effektiven Ionenaustausch führt.

Der Ionenaustauschprozess erzeugt eine Druckbeanspruchung von mehreren hunderten MPs auf der Glasoberfläche und eine Zugbeanspruchung in der Mitte des Glases entsprechend der Tatsache, dass die Oberflächendruckbeanspruchung verhindert, dass sich kleine Defekte ausbreiten, und somit wird ein verfestigender Effekt erhalten, wenn eine Außenlast ausgeübt wird.

Allgemein kann durch einen Ionenaustauschprozess eine Tiefe einer Ionenaustauschschicht (die als DoL - Depth of Ion Exchange Layer - bezeichnet wird) von mehreren Dutzenden Mikrometern auf der Glasoberfläche erhalten werden, die gegenüber äußeren Kräften eine hohe Kratzfestigkeit besitzt.

Um der Anforderung einer Anwendung als Abdeckplatte eines Touchscreens zu genügen, ist eine schnelle und effektive Verfestigungsbehandlung hinsichtlich der praktischen Perspektive sehr wichtig. In CN 10137770 A ist aufgezeichnet, dass eine Behandlung drei bis acht Stunden bei einer Temperatur im Bereich von 430 bis 490°C durchgeführt wird. Außerdem ist in CN 101508524 A aufgezeichnet, dass das Glas acht Stunden lang bei 420°C oder fünf Stunden lang bei 500°C behandelt werden muss, um eine DoL von über 40 Mikrometern zu erhalten. Jedoch löst eine hohe Salzbadbehandlungstemperatur oder eine lange Behandlungszeit im Allgemeinen das Netzwerk der Glasoberfläche schnell, wodurch eine geringere Oberflächendruckbeanspruchung erzeugt wird.

Außerdem wurde ein "grünes" Glas ohne schädliche Substanzen der neue Trend bei Elektronikprodukten. Alle Formulierungen eines Glases, die in US 2008/0286548, US 5,895,768, CN 101575167 A, CN 101337770 A und CN 101508524 A offenbart werden, sind mit As₂O₃, Sb₂O₃, Cl₂ oder F₂ als ein Mittel zur Glasverfeinerung involviert, was jedoch den Möglichkeiten ihres breiten Einsatzes in der Elektronikindustrie Beschränkungen auferlegt.

Zudem gibt es für einen Touchscreen, insbesondere für ein Touchscreenglas, das in öffentlichen Outdoorplätzen verwendet wird, eine Möglichkeit, dass sich ein Bakterium durch Finger verbreitet, was eine antibakterielle Funktion für einen Touchscreen der neuen Generation erfordert. Gemäß dem Bericht von US 2007/0172661 wird die obige Funktion auf der Oberfläche eines normalen flachen Glases oder einer Glaskeramik hauptsächlich durch einen Filmbeschichtungsprozess oder durch einen Ionenaustauschprozess erzielt. Sein Prinzip besteht darin, Silberionen auf der Glasoberfläche einzuführen, um Bakterien zu absorbieren und abzutöten.

### Inhalt der Erfindung

In dem Stand der Technik besitzt das Silikatglas für einen Touchscreen die folgenden Nachteile:
1. Die Kratzfestigkeit und die Transmissivität des Glases sind nicht ausreichend hoch;
2. Ein Glas mit einer Dicke zwischen 0,3 mm und 1,5 mm besitzt nicht genügend Festigkeit und Zähigkeit;
3. Eine hohe Salzbadbehandlungstemperatur oder eine lange Behandlungszeit können das Netzwerk der Glasoberfläche schnell lösen, was zu einer niedrigeren Oberflächendruckbeanspruchung führt;
4. Das Verwenden von As₂O₃ , Sb₂O₃ , Cl₂ oder F₂ als ein Verfeinerungsmittel für die Glasverfeinerung kann sich nachteilig auf die Umgebung auswirken;
5. Das Einführen von Silberionen auf der Glasoberfläche zum Absorbieren von Bakterien erfordert einen komplizierten Prozess.

Die Erfinder der vorliegenden Erfindung haben nach einer langen Untersuchung herausgefunden, dass ein Glas mit einer hohen Festigkeit, Härte, Kratzfestigkeit und einem hohen Elastizitätsmodul erhalten werden kann, indem eine Aluminosilikatglaszusammensetzung mit einer neuartigen Formulierung verwendet wird, es einer Verfestigungsbehandlung unter geeigneten chemischen Niedertemperaturhärtungsbedingungen unterzogen wird, zur Verwendung als Abdeckplatte und als ein Substratglas eines projektiven kapazitiven Touchscreens sowie eines Touchscreens von anderen Elektronikprodukten.

Eine Aluminosilikatglaszusammensetzung mit einer neuartigen Formulierung wird in der vorliegenden Erfindung verwendet, die nach einer Verfestigungsbehandlung unter einer geeigneten chemischen Niedertemperaturhärtungsbedingung ein Glas mit einer Dicke im Bereich von 0,3 mm bis 1,5 mm bereitstellen kann, insbesondere ein Glas mit einer großen Härte, einem hohen Elastizitätsmodul und einer hohen Kratzfestigkeit. Gleichzeitig kann das Glas der vorliegenden Erfindung nach einer chemischen Verfestigung eine noch höhere Schlagfestigkeit aufweisen. Das Aluminosilikatglas der vorliegenden Erfindung besitzt eine hohe Festigkeit und eine hohe Kratzfestigkeit und lässt sich bevorzugt auf Outdooranwendungen anwenden.

Das Glas der vorliegenden Erfindung wird durch Floaten hergestellt, und in dem Zinnbad erzeugtes Zinndioxid kann den Effekt des Entfernens von Blasen erreichen. Deshalb ist es nicht notwendig, umweltunfreundliche Substanzen als ein Verfeinerungsmittel zu verwenden.

Deshalb besteht eine Aufgabe der vorliegenden Erfindung in der Bereitstellung eines Aluminosilikatglases für Touchscreens, wobei das Aluminosilikatglas eine hohe Festigkeit und Kratzfestigkeit aufweist und als eine Abdeckplatte oder Substrat eines Touchscreens verwendet werden kann.

Eine weitere Aufgabe der vorliegenden Erfindung besteht in der Bereitstellung eines chemischen Verfestigungsverfahrens für ein Aluminosilikatglas zur Verwendung als Touchscreen. Das Verfahren kann effektiv bei einer niedrigeren Temperatur für eine kürzere Zeitperiode zum Verfestigen des Glases für einen Touchscreen verwendet werden.

Zudem besteht die Aufgabe der vorliegenden Erfindung in der Bereitstellung eines Glases mit einer antibakteriellen Oberflächenfunktion zur Verwendung als Abdeckplatte eines Touchscreens.

Die vorliegende Anmeldung betrifft insbesondere die folgenden Erfindungen.

Die vorliegende Erfindung stellt ein Aluminosilikatglas bereit, das dadurch gekennzeichnet ist, dass das Glas aus den folgenden Komponenten besteht, berechnet auf der Basis des Gewichtsprozentsatzes (Gew.-%):

| | |
|---|---|
| SiO₂ | 55 bis 65 |
| Na₂O | 12 < bis 17 |
| Al₂O₃ | 15 < bis 20 |
| K₂O | 2 bis 6 |
| MgO | 3,9 bis 10 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |

Bei der vorliegenden Erfindung basiert der Gehalt an jeder der Komponenten auf dem Gesamtgewicht der Glaskomponenten (im Folgenden die Gleichen).

Bei einer Ausführungsform beträgt die Menge an SiO₂ zwischen 58 und 63 Gew.-%.

Bei einer Ausführungsform beträgt die Menge an Na₂O zwischen 12 < bis 15 Gew.-%.

Bei einer Ausführungsform beträgt die Menge an K₂O zwischen 3 und 5 Gew.-%.

Bei einer Ausführungsform beträgt die Menge an Al₂O₃ zwischen 15 < bis 18 Gew.-%.

Bei einer Ausführungsform beträgt die Menge an Al₂O₃ zwischen 15 < bis 17 Gew.-%.

Bei einer Ausführungsform beträgt die Menge an MgO zwischen 3,9 und 8,0 Gew.-%.

Bei einer Ausführungsform beträgt die Menge an MgO zwischen 3,9 und 6,0 Ges.-%.

Bei einer Ausführungsform sind die Mengen an ZnO und CaO jeweils unter 2 Gew.-%.

Bei einer Ausführungsform beträgt die Menge an ZrO₂ zwischen 0,1 und 3 Gew.-%.

Bei einer Ausführungsform beträgt die Menge an ZrO₂ zwischen 0,1 und 2 Gew.-%.

Bei einer Ausführungsform beträgt die Summe der Mengen von Komponenten Na₂O+K₂O+MgO+ZnO+CaO zwischen 15 und 25 Ges. -%.

Die vorliegende Erfindung stellt auch ein Verfahren für die Glasverfestigung bereit, das Folgendes umfasst: Bereitstellen des Aluminosilikatglases der vorliegenden Erfindung und Unterziehen einer Ionenaustauschverfestigung in einem 100% KNO₃-Salzbad, wobei eine Vorheiztemperatur im Bereich zwischen 370°C und 430°C liegt, und eine Zeitperiode für die Behandlung zwischen 0,5 und 16 Stunden beträgt.

Bei einer Ausführungsform liegt die Temperatur im Bereich von 370 bis 420°C, und die Behandlungszeit liegt im Bereich von 0,5 bis 8 Stunden.

Bei einer Ausführungsform liegt die Temperatur im Bereich von 380 bis 420°C, und die Behandlungszeit liegt im Bereich von 0,5 bis 4 Stunden.

Bei einer Ausführungsform liegt die Temperatur im Bereich von 390 bis 410°C, und die Behandlungszeit liegt im Bereich von 1 bis 3 Stunden.

Bei einer Ausführungsform weist nach dem Ionenaustausch das Aluminosilikatglas eine Druckbeanspruchung von 600 bis 1000 MPa auf.

Bei einer Ausführungsform weist nach dem Ionenaustausch das Aluminosilikatglas eine DoL von 10 bis 80 µm auf.

Bei einer Ausführungsform weist nach dem Ionenaustausch das Aluminosilikatglas eine DoL von 10 bis 40 µm auf.

Bei einer Ausführungsform weist nach dem Ionenaustausch das Aluminosilikatglas eine DoL von 10 bis 30 µm auf.

Bei einer Ausführungsform weist nach dem Ionenaustausch das Aluminosilikatglas eine DoL von 10 bis 20 µm auf.

Bei einer Ausführungsform weist nach dem Ionenaustausch das Aluminosilikatglas mit einer Dicke von 0,3 mm einen

Kugelfall-Bruchhöhen-Festigkeitsversuch von 200 bis 400 mm und eine Ring-auf-Ring-Bruchkraft von 400 bis 1000 N auf.

Bei einer Ausführungsform weist nach dem Ionenaustausch das Aluminosilikatglas mit einer Dicke von 0,5 mm einen Kugelfall-Bruchhöhen-Festigkeitsversuch von 300 bis 500 mm und eine Ring-auf-Ring-Bruchkraft von 500 bis 1200 N auf.

Bei einer Ausführungsform weist nach dem Ionenaustausch das Aluminosilikatglas mit einer Dicke von 0,7 mm einen Kugelfall-Bruchhöhen-Festigkeitsversuch von 400 bis 1000 mm und eine Ring-auf-Ring-Bruchkraft von 1000 bis 4000 N auf.

Bei einer Ausführungsform ist nach dem Ionenaustausch die zentrale Spannung unter 60 MPa.

Bei einer Ausführungsform ist nach dem Ionenaustausch die zentrale Spannung unter 30 MPa.

Die vorliegende Erfindung stellt eine Aluminosilikatglasplatte bereit, die dadurch gekennzeichnet ist, dass die Glasplatte aus den folgenden Komponenten besteht, berechnet auf der Basis des Gewichtsprozentsatzes (ges.-%):

| | |
|---|---|
| SiO₂ | 55 bis 65 |
| Na₂O | 12 < bis 17 |
| Al₂O₃ | 15 < bis 20 |
| K₂O | 2 bis 6 |
| MgO | 3,9 bis 10 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |

Bei einer Ausführungsform beträgt die Menge an SiO₂ zwischen 58 und 63 Gew.-%.

Bei einer Ausführungsform beträgt die Menge an Na₂O zwischen 12 < bis 15 Gew.-%.

Bei einer Ausführungsform beträgt die Menge an K₂O zwischen 3 und 5 Gew.-%.

Bei einer Ausführungsform beträgt die Menge an Al₂O₃ zwischen 15 < bis 18 Gew.-%.

Bei einer Ausführungsform beträgt die Menge an Al₂O₃ zwischen 15 < bis 17 Gew.-%.

Bei einer Ausführungsform beträgt die Menge an MgO zwischen 3,9 und 8,0 Gew.-%.

Bei einer Ausführungsform beträgt die Menge an MgO zwischen 3,9 und 6,0 Gew.-%.

Bei einer Ausführungsform sind die Mengen an ZnO und CaO jeweils unter 2 Gew.-%.

Bei einer Ausführungsform beträgt die Menge an ZrO₂ zwischen 0,1 und 3 Gew.-%.

Bei einer Ausführungsform beträgt die Menge an ZrO₂ zwischen 0,1 und 2 Gew.-%.

Bei einer Ausführungsform beträgt die Summe der Mengen von Komponenten Na₂O+K₂O+MgO+ZnO+CaO zwischen 15 und 25 Gew.-%.

Die vorliegende Erfindung stellt auch ein Verfahren für die Glasverfestigung bereit, das Folgendes umfasst: Bereitstellen der Aluminosilikatglasplatte der vorliegenden Erfindung und Unterziehen einer Ionenaustauschverfestigung in einem 100% KNO₃-Salzbad, wobei eine Vorheiztemperatur im Bereich zwischen 370°C und 430°C liegt, und eine Zeitperiode für die Behandlung zwischen 0,5 und 16 Stunden beträgt.

Bei einer Ausführungsform liegt die Temperatur im Bereich von 370 bis 420°C, und die Behandlungszeit liegt im Bereich von 0,5 bis 8 Stunden.

Bei einer Ausführungsform liegt die Temperatur im Bereich von 380 bis 420°C, und die Behandlungszeit liegt im Bereich von 0,5 bis 4 Stunden.

Bei einer Ausführungsform liegt die Temperatur im Bereich von 380 bis 410°C, und die Behandlungszeit liegt im Bereich von 1 bis 3 Stunden.

Bei einer Ausführungsform weist nach dem Ionenaustausch die Aluminosilikatglasplatte eine Druckbeanspruchung von 600 bis 1000 MPa auf.

Bei einer Ausführungsform weist nach dem Ionenaustausch die Aluminosilikatglasplatte eine DoL von 10 bis 80 µm auf.

Bei einer Ausführungsform weist nach dem Ionenaustausch die Aluminosilikatglasplatte eine DoL von 10 bis 40 µm auf.

Bei einer Ausführungsform weist nach dem Ionenaustausch die Aluminosilikatglasplatte eine DoL von 10 bis 30 µm auf.

Bei einer Ausführungsform weist nach dem Ionenaustausch die Aluminosilikatglasplatte eine DoL von 10 bis 20 µm auf.

Bei einer Ausführungsform weist nach dem Ionenaustausch die Aluminosilikatglasplatte mit einer Dicke von 0,3 mm einen Kugelfall-Bruchhöhen-Festigkeitsversuch von 200 bis 400 mm und eine Ring-auf-Ring-Bruchkraft von 400 bis 1000 N auf.

Bei einer Ausführungsform weist nach dem Ionenaustausch die Aluminosilikatglasplatte mit einer Dicke von 0,5 mm einen Kugelfall-Bruchhöhen-Festigkeitsversuch von 300 bis 500 mm und eine Ring-auf-Ring-Bruchkraft von 500 bis 1200 N auf.

Bei einer Ausführungsform weist nach dem Ionenaustausch die Aluminosilikatglasplatte mit einer Dicke von 0,7 mm einen Kugelfall-Bruchhöhen-Festigkeitsversuch von 400 bis 1000 mm und eine Ring-auf-Ring-Bruchkraft von 1000 bis 4000 N auf.

Bei einer Ausführungsform ist nach dem Ionenaustausch die zentrale Spannung unter 60 MPa.

Bei einer Ausführungsform ist nach dem Ionenaustausch die zentrale Spannung unter 30 MPa.

Das Aluminosilikatglas oder die Aluminosilikatglasplatte der vorliegenden Erfindung wird durch Floaten hergestellt.

Bei einer Ausführungsform weist das durch Floaten hergestellte Aluminosilikatglas oder die durch Floaten hergestellte Aluminosilikatglasplatte eine Dicke von 0,5 mm bis 20 mm auf.

Das Aluminosilikatglas oder die Aluminosilikatglasplatte der vorliegenden Erfindung wird durch einen Tiefziehprozess hergestellt.

Bei einer Ausführungsform wird für das durch den Tiefziehprozess hergestellte Aluminosilikatglas oder die durch den Tiefziehprozess hergestellte Aluminosilikatglasplatte ein Verfeinerungsmittel, ausgewählt aus Arsentrioxid, Antimontrioxid, Sulfat, Nitrat, Fluorid oder Chlorid, verwendet.

Bei einer Ausführungsform weist das durch den Tiefziehprozess hergestellte Aluminosilikatglas oder die durch den Tiefziehprozess hergestellte Aluminosilikatglasplatte eine Dicke von 0,1 bis 1,5 mm auf.

Das Aluminosilikatglas oder die Aluminosilikatglasplatte der vorliegenden Erfindung wird als ein Touchscreen verwendet.

Der Touchscreen des Aluminosilikatglases der vorliegenden Erfindung ist für eine mobile Elektronikeinrichtung.

Die vorliegende Erfindung stellt auch eine mobile Elektronikeinrichtung bereit, wobei die mobile Elektronikeinrichtung eine Aluminosilikatglas-Deckplatte umfasst, wobei die Aluminosilikatglas-Deckplatte aus den folgenden Komponenten besteht, berechnet auf der Basis von Gewichtsprozent (Gew. -%):

| | |
|---|---|
| SiO₂ | 55 bis 65 |
| Na₂O | 12 < bis 17 |
| Al₂O₃ | 15 < bis 20 |
| K₂O | 2 bis 6 |
| MgO | 3,9 bis 10 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |

Die vorliegende Erfindung stellt weiterhin ein Verfahren für die Produktion einer antibakteriellen und getemperten Aluminosilikatglasplatte bereit, das das Bereitstellen der Aluminosilikatglasplatte der vorliegenden Erfindung und das Zusetzen von Silbernitrat in ein geschmolzenes Nitrat während der chemischen Verfestigung umfasst.

Bei einer Ausführungsform wird das Silbernitrat dem KNO₃-Salzbad mit einem Gewichtsprozentsatz von 0,1 bis 15% auf der Basis des Gesamtgewichts des geschmolzenen Salzes zugesetzt.

Bei einer Ausführungsform wird das Silbernitrat dem KNO₃-Salzbad mit einem Gewichtsprozentsatz von 0,1 bis 10% auf der Basis des Gesamtgewichts des geschmolzenen Salzes zugesetzt.

Bei einer Ausführungsform wird das Silbernitrat dem KNO₃-Salzbad mit einem Gewichtsprozentsatz von 0,1 bis 5% auf der Basis des Gesamtgewichts des geschmolzenen Salzes zugesetzt.

Die vorliegende Erfindung stellt weiterhin ein antibakterielles und getempertes Aluminosilikatglas zur Verwendung als ein Touchscreen bereit, das dadurch gekennzeichnet ist, dass das Glas aus den folgenden Komponenten besteht, berechnet auf der Basis von Gewichtsprozent (Gew.-%):

| | |
|---|---|
| SiO₂ | 55 bis 65 |
| Na₂O | 12 < bis 17 |
| Al₂O₃ | 15 < bis 20 |
| K₂O | 2 bis 6 |
| MgO | 3,9 bis 10 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |

Das Glas ist weiterhin dadurch gekennzeichnet, dass Zusetzen von Silbernitrat in ein geschmolzenes Nitrat während des chemischen Verfestigens des Glases, das Glas mindestens eine der folgenden Eigenschaften nach dem Ionenaustausch aufweist:
- eine DoL von 10 bis 80 µm;
- eine zentrale Spannung unter 60 MPa;
- eine Druckbeanspruchung von 600 bis 1000 MPa;
- ein Glas von 0,3 mm Dicke mit einem Kugelfall-Bruchhöhen-Festigkeitsversuch von 200 bis 400 mm und einer Ring-auf-Ring-Bruchkraft von 400 bis 1000 N;
- ein Glas von 0,5 mm Dicke mit einem Kugelfall-Bruchhöhen-Festigkeitsversuch von 300 bis 500 mm und einer Ring-auf-Ring-Bruchkraft von 500 bis 1200 N;
- ein Glas von 0,7 mm Dicke mit einem Kugelfall-Bruchhöhen-Festigkeitsversuch von 400 bis 1000 mm und einer Ring-auf-Ring-Bruchkraft von 1000 bis 4000 N; und
- eine antibakterielle Funktion.

Bei einer Ausführungsform wird die Ionenaustauschverfestigung in einem 100% KNO₃-Salzbad durchgeführt, wobei die Vorheiztemperatur im Bereich zwischen 370°C und 430°C liegt und die Zeitperiode für die Behandlung zwischen 0,5 und 16 Stunden beträgt.

Bei einer Ausführungsform wird die Ionenaustauschverfestigung in einem 100% KNO₃-Salzbad durchgeführt, wobei die Vorheiztemperatur im Bereich zwischen 370°C und 420°C liegt und die Zeitperiode für die Behandlung zwischen 0,5 und 8 Stunden beträgt.

Bei einer Ausführungsform wird die Ionenaustauschverfestigung in einem 100% KNO₃-Salzbad durchgeführt, wobei die Vorheiztemperatur im Bereich zwischen 380°C und 420°C liegt und die Zeitperiode für die Behandlung zwischen 0,5 und 4 Stunden beträgt.

Bei einer Ausführungsform wird die Ionenaustauschverfestigung in einem 100% KNO₃ -Salzbad durchgeführt, wobei die Vorheiztemperatur im Bereich zwischen 390°C und 410°C liegt und die Zeitperiode für die Behandlung zwischen 1 und 3 Stunden beträgt.

Bei einer Ausführungsform wird das Silbernitrat dem KNO₃-Salzbad mit einem Gewichtsprozentsatz von 0,1 bis 15% auf der Basis des Gesamtgewichts des geschmolzenen Salzes zugesetzt.

Bei einer Ausführungsform wird das Silbernitrat dem KNO₃-Salzbad mit einem Gewichtsprozentsatz von 0,1 bis 10% auf der Basis des Gesamtgewichts des geschmolzenen Salzes zugesetzt.

Bei einer Ausführungsform wird das Silbernitrat dem KNO₃-Salzbad mit einem Gewichtsprozentsatz von 0,1 bis 5% auf der Basis des Gesamtgewichts des geschmolzenen Salzes zugesetzt.

Das bevorzugte Aluminosilikatglas der vorliegenden Erfindung ist dadurch gekennzeichnet, dass das Glas aus den folgenden Komponenten besteht, berechnet auf der Basis von Gewichtsprozent (Gew. -%):

| | |
|---|---|
| SiO₂ | 56 bis 64 |
| Na₂O | 12,1 bis 16,5 |
| Al₂O₃ | 15,1 bis 19,0 |
| K₂O | 2, 5 bis 5, 5 |
| MgO | 3,9 bis 9,0 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |

Ein weiteres bevorzugtes Aluminosilikatglas der vorliegenden Erfindung ist dadurch gekennzeichnet, dass das Glas aus den folgenden Komponenten besteht, berechnet auf der Basis von Gewichtsprozent (Gew. -%):

| | |
|---|---|
| SiO₂ | 57 bis 63 |
| Na₂O | 12,1 bis 16,0 |
| Al₂O₃ | 15,1 bis 18,5 |
| K₂O | 2,8 bis 5,0 |
| MgO | 4,0 bis 9,0 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO2 + CeO₂ | ≤ 1 |

Die vorliegende Erfindung stellt ein Verfahren für die Herstellung einer antibakteriellen und getemperten Aluminosilikatglas-Deckplatte bereit, das heißt, während des chemischen Verfestigens des Glases wird Silbernitrat in ein geschmolzenes Nitrat zugesetzt. Silberionen können während des Ionenaustauschs in die Glasoberfläche eindringen, um den antibakteriellen Effekt zu erzielen.

Das Glas der vorliegenden Erfindung kann auch in anderen Anwendungen verwendet werden, wie etwa für die Abdeckplatte von Elektronikeinrichtungen wie etwa Laptop-Computern, Mobiltelefonen und dergleichen, um die inneren Elektronikkomponenten zu schützen; für das Abdeckplattenglas von fotoelektrischen (Einrichtungs-) Platten; für das Substrat von Festplatten und für das Abscheidungssubstrat oder die schützende Abdeckplatte von Filmsolarzellen. Diese Abdeckplatten und Substrate erfordern während der Benutzung über lange Zeit eine hohe Festigkeit und eine hohe Kratzfestigkeit.

### Ausführliche Beschreibung der Erfindung

SiO₂ ist eine Hauptkomponente eines Glases zum Ausbilden des Netzwerks. Falls die Menge an SiO₂ unter 55 Gew.-% liegt, sinken die Formbarkeit und der chemische Widerstand des Glases und das Glas wird eine größere Tendenz zum Kristallisieren haben. Falls die Menge über 65 Gew.-% liegt, wird das Glas eine höhere Viskosität und einen höheren Schmelzpunkt aufweisen, was sich für den Float-Prozess nicht eignet. Zum Zweck des Beibehaltens einer guten Formbarkeit und einer entsprechenden Schmelz- und Formtemperatur liegt die Menge an SiO₂ bevorzugt im Bereich von 58 bis 63 Gew.-%.

Der Zusatz von Alkalioxiden wie etwa Na₂O und K₂O zu einem Glas kann die Schmelztemperatur senken. Insbesondere ist zum Erfüllen einer effektiven Ionenaustauschverfestigung eine höhere Menge an NO₂ für den Austausch von K+←→Na⁺ erforderlich. Je mehr Ionen zwischen einem Glas und einem Salz (KNO₃) ausgetauscht werden, umso höher ist die Festigkeit, die ein Glas aufweist. Eine übermäßige Menge an Alkali kann jedoch den Wärmeausdehnungskoeffizienten erhöhen, wodurch die Hitzebeständigkeit und die Formbarkeit des Glases abnehmen. Deshalb ist die Menge der Komponente Na₂O auf den Bereich von 12 < bis 17 Gew.-% und besonders bevorzugt auf den Bereich von 12 < bis 15 Gew.-% begrenzt. Die Menge a K₂O wird niedrig gehalten, zum Beispiel ≤ 6 Gew.-%, um eine abträgliche Auswirkung auf den Ionenaustauschprozess zu vermeiden. Die Menge an K₂O liegt bevorzugt zwischen 3 und 5 Gew.-%.

Zum Bereitstellen eines Glasmaterials mit hoher Festigkeit und Härte ist Al₂O₃ eine unabdingbare Komponente. Außerdem weist das Glas auch während der Behandlung eine hohe Kratzfestigkeit auf. Um eine schnelle Diffusion zu erzielen, wird erwartet, dass eine hohe Menge an Al₂O₃ in dem Glas den Ionenaustauschprozess von Na⁺←→K⁺ erleichtert, da Al₃⁺ im Allgemeinen ein Netzwerk [AlO₄] bildet, das viel größer ist als ein regelmäßiges [SiO₄]-Netzwerk, und dann werden größere Poren als Diffusionskanäle von Ionen zurückgelassen, was einen Beitrag zum Abschluss des Ionenaustauschprozesses in einer kurzen Zeitperiode liefert, wie etwa innerhalb von 0,5 Stunden bis 8 Stunden bei einer niedrigen Temperatur wie etwa 370 bis 430°C. Eine Menge von über 20 Gew.-% Al₂O₃ verstärkt jedoch die Tendenz zur Kristallisierung und die Viskosität des Glases und sollte deshalb vermieden werden. Die vorliegende Erfindung weist eine Menge an Al₂O₃ allgemein zwischen 15 < bis 20 Gew.-%, bevorzugt von 15 < bis 18 Gew.-% und ganz besonders bevorzugt von 15 < bis 17 Gew.-% auf.

MgO ist ebenfalls eine unabdingbare Komponente. Eine Menge von weniger als 10 Gew.-% MgO unterstützt das Senken des Schmelzpunkts, das Verbessern der Homogenität, das Vergrößern der Anti-Hydrolyse und das Beschleunigen des Ionenaustauschs. Die Menge an MgO liegt im Bereich von 3,9 bis 10,0 Gew.-%, bevorzugt im Bereich von 3,9 bis 8,0 Gew.-% und ganz besonders bevorzugt im Bereich von 3,9 bis 6,0 Gew.-%.

ZnO und CaO besitzen ähnliche Funktionen, doch wird ein übermäßiger Zusatz die Tendenz zur Kristallisierung vergrößern. Bei der vorliegenden Erfindung sind die Mengen an ZnO und CaO auf unter 4 Gew.-%, und bevorzugt jeweils unter 2 Gew.-%, begrenzt.

ZrO₂ wird als die Komponente zum weiteren Verbessern des Elastizitätsmoduls und des chemischen Widerstands des Glases und Verbessern des Ionenaustauschs verwendet. ZrO₂ ist jedoch auch die Komponente, die die Tendenz zur Kristallisierung und den Schmelzpunkt erhöhen kann. Deshalb beträgt die Menge an ZrO₂ unter 5 Gew. -%, bevorzugt von 0,1 bis 3 Gew.-% und ganz besonders bevorzugt von 0,1 bis 2 Gew.-%.

Die Komponenten (Na₂O+K₂O+MgO+ZnO+CaO) müssen weiter begrenzt werden, was den bevorzugten Zusammensetzungsbereich weiter verengt. Die Summe der Komponenten (Na₂O+K₂O+MgO+ZnO+CaO) sollte innerhalb des Bereichs von 15 bis 28 Gew.-% liegen, um eine gute Schmelzbarkeit und Formbarkeit des Glases beizubehalten. Bei der vorliegenden Erfindung beträgt die Summe von Komponenten (Na₂O+K₂O+MgO+ZnO+CaO) ganz besonders bevorzugt von 15 bis 25 Gew.-%.

In besonderen Fällen kann der Zusatz von TiO₂ und CeO₂ die Schmelzbarkeit des Glases verbessern. Die Gesamtmenge davon liegt jedoch unter 1 Gew.-%.

Das Glas der vorliegenden Erfindung ist frei von B₂O₃. Der Zusatz von B₂O₃ kann die Schmelzbarkeit des Glases verbessern und den Schmelzpunkt des Glases senken. Ein großer Nachteil beim Zusatz von B₂O₃ ist jedoch die negative Auswirkung auf die chemische Verstärkung von Ionenaustausch, das heißt Senken der Ionenaustauschgeschwindigkeit und das Nichtaufweisen einer hohen Oberflächendruckbeanspruchung, was auf die Tatsache zurückzuführen ist, dass Boroxid das dichte [BO₄]-Netzwerk bildet, was die Migration von Ionen in das Glas begrenzt.

Außerdem umfassen die Glaskomponenten bei der vorliegenden Erfindung keine umweltunfreundlichen Schwermetallelemente wie etwa BaO, PbO usw.

SNO₂ wird während des Floatens, durch das das Glas der vorliegenden Erfindung hergestellt wird, auf dem Zinnbad ausgebildet. Während des Schmelzens ist es vollständig unnötig, schädliche Additive wie etwa As₂O₃, Sb₂O₃, Sulfat, Nitrat für den Verfeinerungsprozess des Glases zuzusetzen, wodurch das "grüne" Glas hergestellt wird, ohne schädliche Komponenten zu enthalten. Es ist das Wesen des Produktionsprozesses per se, dass die Glasoberfläche höchstens 1,0 Gew.-% SNO₂ enthalten kann, was gleichwohl die Eigenschaft des Glases nicht beeinflusst.

Für einen Fachmann ist eine Modifikation, sogar eine kleine Modifikation der Zusammensetzungen eines Float-Glases, allgemein schwer zu bewältigen aufgrund der großen Investitionen in eine derartige Art von Einrichtung. Falls die Komponenten des Glases eine Beschleunigung der Beschädigung von feuerfesten Materialien verursachen, ist die Reparatur der Einrichtung in der praktischen Produktion sehr teuer.

Die Float-Produktion eines Glases ist ein bekannter Prozess. Nach dem Entnehmen aus dem Ofen durchläuft die Glasschmelze ein flüssiges Zinn enthaltendes Bad, das Glas treibt auf dem flüssigen Zinn und die Glasviskosität wird während des Transferierens nach vorne erhöht. Ein derartiger Prozess erreicht den Zweck, ein Glas mit einer sauberen Oberfläche zu formen.

Andere Verfahren zum Herstellen eines Flachglases wie etwa der Tiefziehprozess eignen sich ebenfalls für die Produktion des Glases der vorliegenden Erfindung. Unter den Umständen können Verfeinerungsmittel einschließlich Arsentrioxid, Antimontrioxid, Sulfat, Nitrat, Fluorid, Chlorid usw. verwendet werden.

Der Tiefziehprozess für die Produktion eines Glases ist ebenfalls ein bekannter Prozess für die Glasverarbeitung. Nach dem Entnehmen aus dem Ofen durchläuft das Glas ein Bad. Das Glas mit einer niedrigeren Viskosität läuft nach unten durch einen schmalen Schlitz an dem unteren Teil des Bades über, und somit wird das Glas geformt und weist eine glatte Oberfläche auf.

Die Vorzüge des Floating-Prozesses bestehen darin, dass ein großes Glas mit einem breiteren Dickenbereich mit vergleichsweise geringeren Kosten hergestellt wird. Die Dicke des Glases der vorliegenden Erfindung liegt im Bereich von 0,5 mm bis 20 mm. Das durch den Tiefziehprozess hergestellte Glas weist im Allgemeinen eine Dicke im Bereich von 0,1 mm bis 1,5 mm auf.

Ein 100% KNO₃-Salzbad wird für die Ionenaustauschverfestigung verwendet. Ein Edelstahlrahmen ist so ausgelegt, dass er das Glas zuführt, und das Glas wird dann nach einem Vorheizschritt in dem Salzbad platziert. Das Vorheizen wird normalerweise bei einer Temperatur im Bereich von 370°C bis 430°C, bevorzugt von 370°C bis 420°C, besonders bevorzugt von 380°C bis 420°C und ganz besonders bevorzugt von 390°C bis 410°C, durchgeführt. Die Behandlungszeit liegt zwischen 0,5 und 16 Stunden, bevorzugt zwischen 0,5 und 8 Stunden, besonders bevorzugt zwischen 0,5 und 4 Stunden und ganz besonders bevorzugt zwischen 1 und 3 Stunden.

Eine chemische Verfestigung besteht in dem Austauschen von kleineren Ionen (normalerweise Na⁺) durch größere Ionen (normalerweise K⁺), wodurch eine Druckbeanspruchung auf die Glasoberfläche mit dem Ergebnis ausgebildet wird, die Bruchzähigkeit und die Festigkeitszuverlässigkeit eines Glases zu verstärken. Analog kann ein Li⁺-Ionen enthaltendes Glas durch ein Na⁺ enthaltendes Salz wie etwa NaNO₃ verstärkt werden. Deshalb sollten Alkalimetallionen in einem Glas vorliegen, da sie die höchste Diffundierbarkeit aufweisen.

KNO₃ ist die ganz besonders bevorzugte Verbindung für die Glasverfestigung für ein Salzbad. Alternativ können verschiedene Katalysatoren zusammen mit KNO₃ verwendet werden, um die Austauschgeschwindigkeit von Ionen zu fördern oder Eigenschaften des verfestigten Glases zu verbessern. Beispiele für die Katalysatoren sind K₂SO₄, K₂SiO₄, KOH, Al₂O₃, Al (OH)₃ usw.

Temperatur und Zeit sind die wichtigsten Faktoren, die einen Verfestigungsprozess beeinflussen. KNO₃ beginnt bei etwa 337°C zu schmelzen und zersetzt sich bei etwa 400°C. Der Temperaturbereich von 360°C bis 500°C findet breite Anwendung für das chemische Verfestigen eines Glases. Das durch niedrige Temperaturen herbeigeführte Problem ist jedoch das Nichterreichen einer schnellen Ionenaustauschgeschwindigkeit, während höhere Temperaturen das Netzwerk auf der Glasoberfläche schnell auflösen könnten und keine hohe Druckbeanspruchung erhalten werden könnte. Analog könnte eine kürzere Zeitperiode für die Behandlung das Ioneneindringen unzureichend machen, während eine übermäßig lange Zeitperiode für die Behandlung das Netzwerk eines Glases auflösen könnte, was zu einem Nichterreichen der gewünschten Effekte führt. Für ideale Eigenschaften sind geeignete Temperaturen und Behandlungszeitperioden erforderlich, um die optimierte Festigkeit und den optimierten Beanspruchungszustand zu erreichen.

Die Oberflächenkratz- und Kantenqualität beeinflussen stark die Festigkeit eines Glases trotz eines verfestigten oder eines nicht-verfestigten Glases. Die Glasfestigkeit nimmt mit zunehmender Kratztiefe allmählich ab. Deshalb sollte ein Oberflächenverkratzen während der Behandlung und der Verarbeitung eines Glases vermieden werden. Und manchmal muss das Glas vor dem Ionenaustausch poliert werden. Bei der vorliegenden Erfindung weist das Glas eine vergleichsweise höhere Härte und somit eine bessere Kratzfestigkeit auf, was während der Behandlung einen hohen Ausbeuteverlust vermeiden könnte, und ohne ein sehr tiefes Oberflächenpolieren.

Die Oberflächendruckbeanspruchung (CS - Compressive Stress), die Tiefe der Druckbeanspruchung (DoL) und die zentrale Zugebeanspruchung (TS - Tensile Stress) sind Eigenschaften zum Bestimmen der Eigenschaften des verfestigten Glases wie etwa die Festigkeit und die Kratzfestigkeit. Ein Glas mit einer höheren Oberflächendruckbeanspruchung besitzt eine höhere Festigkeit, und ein Glas mit einer tieferen DoL weist eine höhere Kratzfestigkeit auf. Unter einer festen Oberflächenspannung wird ein Glas mit einer noch höheren DoL stattdessen eine höhere zentrale Spannung aufweisen, was Möglichkeiten liefert, dass das Glas leicht zerbrochen wird.

Um entsprechende Verfestigungseigenschaften zu erhalten, ist es sehr wichtig, das Profil der Beanspruchung in Abhängigkeit von Temperatur, Zeit und Dicke des Glases auszulegen. Bei einer Behandlung bei einer Temperatur im Bereich von 370°C bis 430°C für 0,5 bis 16 Stunden kann das Glas der vorliegenden Erfindung eine Druckbeanspruchung von nicht weniger als 600 MPa, normalerweise von 600 bis 1000 MPa, und eine DoL von nicht unter 10 µm aufweisen. Normalerweise liegt die DoL im Bereich von 10 bis 80 µm, bevorzugt von 10 bis 40 µm, besonders bevorzugt 10 bis 30 µm und ganz besonders bevorzugt 10 bis 20 µm. Die Behandlung dauert bevorzugt 0,5 bis 8 Stunden bei einer Temperatur im Bereich von 370°C bis 430°C erzeugt nur eine sehr begrenzte Oberflächenlosigkeit. Weiter bevorzugt wird die Behandlung bei einer Temperatur im Bereich von 380°C bis 420°C 0,5 bis 4 Stunden und ganz besonders bevorzugt bei einer Temperatur im Bereich von 390°C bis 410°C 1 bis 3 Stunden durchgeführt. Unter einer optimierten Oberflächenbeanspruchung mit einer bestimmten DoL und einer bestimmten zentralen Zugbeanspruchung kann ein dünnes Glas mit einer Dicke von 0,5 mm oder sogar 0,3 mm ebenfalls gehärtet werden und eine bemerkenswerte Zunahme bei der Bruchfestigkeit aufweisen.

Die herkömmliche Festigkeitsmessung, d.h. Kugelfalltest und Ring-auf-Ring-Festigkeitstest, kann zum Testen der Verbesserung des Glases der vorliegenden Erfindung hinsichtlich Festigkeit und Zuverlässigkeit nach dem Ionenaustausch verwendet werden.

Der Kugelfallfestigkeitstest wird gemäß den folgenden Schritten durchgeführt: eine Stahlkugel mit einem Gewicht von 132 g mit einem Durchmesser von 31,75 mm fällt von einer bekannten Höhe und schlägt auf eine Glasprobe mit der Größe 50 x 50 x 0,7 mm auf. Der Falltest beginnt bei einer Höhe von 200 mm. Der nächste Test beginnt bei einer Höhe 50 mm höher als die letzte, bis die Glasprobe zerbricht.

Der Ring-auf-Ring-Test wird gemäß der folgenden Schritte durchgeführt: ein übliches universelles Festigkeitstestgerät wird zum Ausüben von Druck verwendet. Das Teil zum Ausüben von Kraft ist ein starrer Druckkopf mit einem ringförmigen Ende mit einem Durchmesser von 4 mm. Ein Glied, auf dem das Glas platziert ist, ist ein anderer starrer und ringförmiger Stützring mit einem Durchmesser von 20 mm. Die Glasprobe wird drauf platziert, eine Kraft wird allmählich von dem universellen Festigkeitstestgerät ausgeübt, während der Druckkopf an dem oberen Teil eine Verschiebung zu der Glasprobe erzeugt. Die zum Zerbrechen der Probe erforderliche Kraft wird von dem Festigkeitstestgerät zu dem Zeitpunkt aufgezeichnet, an dem das Glas zerbricht.

Der Kugelfallfestigkeitstest kann zum Beurteilen der Schlagfestigkeit des verstärkten Glases verwendet werden. Im Durchschnitt kann ein Glas der Größe 50 x 50 x 0,7 mm, durch den Standardprozess verfestigt, das Ionenaustausch für 0,5 bis 8 Stunden bei einer Temperatur im Bereich von 370°C bis 430°C durchgeführt wird, den Schlagtest einer Stahlkugel mit einem Gewicht von 132 g mit einem Durchmesser von 31,75 mm aus einer Höhe von 300 mm bestehen. Durch Einstellen von Ionenaustauschparametern kann das verfestigte Glas für einen bevorzugten Fall sogar den Schlagtest einer Stahlkugel mit einem Gewicht von 132 g aus einer Höhe von 800 mm bestehen. Für den ganz besonders bevorzugten Fall kann das Glas den Aufprall einer Stahlkugel aus einer Höhe von sogar 1000 mm aushalten. Das Glas mit einer Dicke von 1,0 mm, 0,5 mm oder sogar 0,3 mm kann die gleiche Größe der Erhöhung bei der Festigkeit nach dem Verfestigen erhalten. Überraschenderweise kann ein Glas mit einer Dicke von 0,5 mm den Schlagtest einer aus einer Höhe von 500 mm fallenden Stahlkugel bestehen, und ein Glas mit einer Dicke von 0,3 mm kann den Schlagtest einer aus einer Höhe von 400 mm fallenden Stahlkugel bestehen, wenn das Glas durch einen optimierten Prozess hergestellt und unter den Bedingungen von Temperatur und Zeit innerhalb der genannten Bereiche behandelt wird.

Wenn von einem universellen Festigkeitstestgerät Kraft allmählich ausgeübt wird, beweist der Ring-auf-Ring-Test, dass die Bruchfestigkeit des Glases signifikant erhöht ist. Für ein Glas mit einer gegebenen Dicke von 0,7 mm weist es vor der Verfestigung eine Ring-auf-Ring-Bruchkraft von 500 bis 800 Newton auf. Nach dem Verfestigen kann die Bruchkraft bis zu 1000 bis 4000 N betragen. Nach dem Verfestigen kann die niedrigste Bruchkraft von 1000 N erhalten werden, besonders bevorzugt ist die Festigkeit größer als 2000 N und ganz besonders bevorzugt kann die Bruchkraft über 4000 N liegen, was bedeutet, dass die Festigkeit nach dem Verfestigen um einen Faktor von über 5 vergrößert werden kann. Für ein Glas mit einer Dicke von 1,0 mm, 0,5 mm und sogar 0,3 mm kann es die gleiche Größe der Festigkeitszunahme nach der Verfestigung aufweisen. Außerdem kann überraschenderweise ein Glas von 0,5 mm eine Bruchkraft von bis zu 1200 N aufweisen, und ein Glas von 0,3 mm kann nach der Verfestigung durch einen optimierten Prozess innerhalb geeigneter Bereiche von Temperatur und Zeit eine Bruchkraft von bis 1000 N aufweisen.

Glas ist ein für Defekte empfindliches Material, was oftmals zu den Ergebnissen von Ungleichförmigkeit für den Test der Glasfestigkeit führt. Die Ungleichförmigkeit kann aufgrund des Verfestigens des Glases dramatisch reduziert werden, indem eine Schicht mit Druckbeanspruchung eingeführt wird und gestattet wird, dass das Glas einem Kratzen durch Außenkraft standhält. Eine größere DoL kann jedoch mit dem Risiko verbunden sein, in dem Glas eine übermäßig große Zugbeanspruchung zu erzeugen, wodurch das Glas leicht brechen kann. Detailliertere Tests zeigen, dass für die Anwendung des Glases der vorliegenden Erfindung das Glas 0,5 bis 16 Stunden in einem Temperaturbereich von 370°C bis 430°C behandelt wird, und ganz besonders bevorzugt reicht es aus, wenn das Glas 1 bis 3 Stunden in einem Temperaturbereich von 390°C bis 410°C behandelt wird. Mit solchen Bereichen von Temperatur und Zeit kann das Glas der vorliegenden Erfindung eine DoL von mindestens 5 µm und höchstens 80 µm aufweisen. Eine längere Behandlungszeit erhöht die DoL der Austauschschicht, verringert aber die Oberflächenbeanspruchung, was zu einer niedrigeren Beanspruchung führt. Insbesondere wird es für ein dünneres Glas das Risiko annehmen, die innere Zugbeanspruchung zu vergrößern und dass wiederum das Glas leicht bricht.

### Die antibakterielle Funktion

Die vorliegende Erfindung stellt ein Touchscreenglas mit antibakterieller Funktion und ein Verfahren zum Erzielen der antibakteriellen Funktion bereit. Die antibakterielle Funktion kann mit chemischer Verfestigung erzielt werden. Die spezifische Ausführungsform beinhaltet das Zusetzen eines gewissen Anteils an Silbernitrat zu geschmolzenem Kaliumnitratsalz während der chemischen Verfestigung, und der Gewichtsprozentsatz beträgt 0,1 bis 15% auf der Basis des geschmolzenen Salzes, bevorzugt 0,1 bis 10% und ganz besonders bevorzugt 0,1 bis 5%. Für das durch das Verfahren hergestellte Glas werden Silberionen aus dem geschmolzenen Salz in eine gewisse Tiefe des Glases durch Ionenaustausch (Ag⁺ zu Na⁺) eindringen, die Dicke beträgt 0 bis 20 Mikrometer und bevorzugt 0 bis 10 Mikrometer. Die Anwesenheit von Silberionen kann die antibakterielle Funktion der Oberfläche eines Touchscreens verstärken.

Gemäß den in US 2007/0172661 offenbarten Informationen kann ein Silberfilm mit antibakterieller Funktion durch einen chemischen Vorläufer, der Silberionen enthält, oder durch Ionenaustausch unter einer gewissen Temperatur erhalten werden, und die Silberionen können bis zu einer gewissen Tiefe des Glases eintreten. Der Vorteil der vorliegenden Erfindung besteht darin, dass die chemische Verfestigung und antibakterielle Funktion durch Ionenaustausch in einem Schritt bewerkstelligt werden können, was erfolgreich auf das Glaspanel für Touchscreens der vorliegenden Erfindung angewendet worden ist.

Die Ionenaustauschbehandlung wird innerhalb eines Temperaturbereichs von 370°C bis 430°C, bevorzugt 370°C bis 420°C, besonders bevorzugt 380°C bis 420°C und ganz besonders bevorzugt 390°C bis 410°C, durchgeführt. Die Zeitperiode für den Ionenaustausch beträgt 0,5 bis 16 Stunden, bevorzugt 0,5 bis 8 Stunden, besonders bevorzugt 0,5 bis 4 Stunden und ganz besonders bevorzugt 1 bis 3 Stunden.

Unter den obigen Ionenaustauschbedingungen können Silberionen bis zu einer Tiefe von mindestens 5 Mikrometern des Glases eintreten. Zum Erzielen einer effektiven antibakteriellen Funktion beträgt die Konzentration an Silberionen mindestens 0,1 Gew.-% in einem Tiefenbereich von 2 µm des Glases, bevorzugt mindestens 0,5 Gew.-%, besonders bevorzugt mindestens 1,0 Gew.-% und ganz besonders bevorzugt über 2,0 Gew.-%.

Normalerweise beeinflusst das Eindringen von Ag-Ionen die Transmissivität von Glas. Die Variation der Transmissivität wird im Vergleich nicht mehr als 5% vor und nach dem Ionenaustausch betragen, bevorzugt nicht mehr als 3%, besonders bevorzugt nicht mehr als 2% und ganz besonders bevorzugt unter 1%, während die antibakterielle Funktion zugleich aufrechterhalten wird.

### Beispiele

Tabelle 1 zeigt die chemischen Verfestigungsbeispiele des Glases der vorliegenden Erfindung.

### Beispiel 1

Zuerst werden die entsprechenden Materialien gemäß den in Beispiel 1 angegebenen Zusammensetzungen formuliert, die Materialien werden in einem Platintiegel bei einer Temperatur von 1600°C bis 1630°C geschmolzen, 5 bis 15 Stunden lang bei dieser Temperatur gehalten; Verfeinern bei einer Temperatur von 1640°C bis 1660°C und dann Kühlen auf eine Temperatur von etwa 1600°C. Der Platintiegel wird aus dem Hochtemperaturofen herausgenommen; die Glasschmelze wird in eine kalte Edelstahlform gegossen, um einen Glastropfen der Größe 65 x 65 x 45 mm herzustellen. Dann wird das Glas zusammen mit der Edelstahlform 2 bis 8 Stunden in einen Temperofen bei einer Temperatur von etwa 600°C platziert.

Nach dem Tempern wird das Glas einem Polieren unterzogen und dann geschnitten, an den Kanten geschliffen und fein poliert, um die Probe von gewünschter Größe auszubilden, das heißt 50 x 50 x 0,7 mm. Nach dem Polieren liegt die Oberflächenrauheit unter 1 Nanometer. Es liegen mindestens 40 Scheiben von Proben vor.

Mindestens 20 Scheiben von Proben werden einer chemischen Verfestigung unterzogen. Die Verfestigung wird in einem Salzbadofen im Labormaßstab (mit einem Durchmesser von 250 x 250 mm und einer Tiefe von 400 mm) durchgeführt. Die Proben werden auf einem speziellen Antikorrosionsedelstahlprobenregal platziert. Nach einem zweistündigen Ionenaustausch bei einer Temperatur von 390°C werden der Fallkugelversuch und der Ring-auf-Ring-Test an 20 Stücken des Glases, das einer chemischen Verfestigung unterzogen wurde, bzw. 20 Stücken des unbehandelten Glases durchgeführt.

Die meisten der unverfestigten Glasscheiben bestehen nicht den Test eines anfänglichen Aufschlags einer 132 g wiegenden Stahlkugel aus einer Höhe von 200 mm, wobei nur einige wenige brechen, wenn die Höhe 250 mm beträgt. Im Durchschnitt sind Proben, die keiner Verfestigung unterzogen wurden, in der Lage, dem Aufprall aus einer Kugelfallhöhe von etwa 200 mm standzuhalten, und die aus dem Ring-auf-Ring-Test erhaltene mittlere Bruchkraft beträgt 550 N.

Unter den gleichen Festigkeitstestbedingungen wird für die getemperten Glasproben ein unerwartetes Testergebnis erhalten. Die durchschnittliche Bruchhöhe einer 132 g wiegenden fallenden Kugel beträgt bis zu 788 mm, um einen Faktor von etwa 4 vergrößert im Vergleich mit den Unverfestigten. Und die durchschnittliche Ring-auf-Ring-Bruchkraft beträgt 1820N, um einen Faktor von etwa 3,3 vergrößert im Vergleich mit den Unverfestigten. Unter zwei Testbedingungen wurde die Festigkeit für all die besten Proben erzielt, die um das Vierfache höher ist als die der Unverfestigten.

Gleichzeitig werden an den behandelten Proben Tests der Oberflächendruckbeanspruchung und der Ionenaustauschtiefe durchgeführt. Im Fall der Behandlung bei einer Temperatur von 390°C über 2 Stunden wird für das Glas in Beispiel 1 eine mittlere Oberflächendruckbeanspruchung von 820 MPa und eine DoL von 20 Mikrometern erhalten.

Ein FSM 6000 wird zum Messen der Oberflächendruckbeanspruchung und der DoL verwendet.

Der Wärmeausdehnungskoeffizient (CTE - Thermal Expansion Coefficient) der erhaltenen Glasprobe wird gemessen. In einem Temperaturbereich von 20°C bis 300°C weist das Mehrkomponentenglas einen linearen Ausdehnungskoeffizienten von 8,7 x 10⁻⁶/°C auf.

Der Glasübergangspunkt (Tg) des erhaltenen Glases wird gemessen. Das Mehrkomponentenglas weist einen Glasübergangspunkt von etwa 590°C auf.

Der Wärmeausdehnungskoeffizient und der Übergangspunkt werden gemäß den folgenden Verfahren gemessen: das heißt mit Verwendung eines Dilatometers gemessen. Die Probe wird als ein Zylinder mit einem Durchmesser von 5 mm verarbeitet. Die Längenänderung von 20°C auf 300°C wird zum Berechnen des linearen Ausdehnungskoeffizienten aufgezeichnet. Um den Glasumwandlungspunkt herum weist der lineare Ausdehnungskoeffizient des Glases eine offensichtliche plötzliche Änderung auf, somit kann der Umwandlungspunkt des Glases durch Extrapolation erhalten werden.

Die Dichte des Glases wird durch das Archimedes-Gesetz gemessen. Die Glasprobe wird in einen Behälter mit Wasser platziert, die Volumenänderung des Wassers wird sorgfältig gemessen und somit wird das Volumen der Probe erhalten. Das Gewicht der Probe, das präzise gemessen werden kann, dividiert durch das Volumen ergibt die Daten der Dichte.

### Beispiel 2

Die entsprechenden Materialien gemäß den in Beispiel 2 angegebenen Zusammensetzungen werden formuliert, die Materialien werden in einem Platintiegel bei einer Temperatur von 1600°C bis 1630°C geschmolzen, 5 bis 15 Stunden lang bei dieser Temperatur gehalten; Verfeinern bei einer Temperatur von 1640°C bis 1660°C und dann Kühlen auf eine Temperatur von etwa 1600°C. Der Platintiegel wird aus dem Hochtemperaturofen herausgenommen; die Glasschmelze wird in eine kalte Edelstahlform gegossen, um einen Glastropfen der Größe 65 x 65 x 45 mm herzustellen. Dann wird das Glas zusammen mit der Edelstahlform 2 bis 8 Stunden in einen Temperofen bei einer Temperatur von etwa 600°C platziert.

Nach dem Tempern wird das Glas einem Polieren unterzogen und dann geschnitten, an den Kanten geschliffen und fein poliert, um die Probe von gewünschter Größe auszubilden, das heißt 50 x 50 x 0,7 mm. Nach dem Polieren liegt die Oberflächenrauheit unter 1 Nanometer. Es liegen mindestens 40 Scheiben von Proben vor.

Die chemische Verfestigung wird 3 Stunden lang bei einer Temperatur von 420°C gemäß den gleichen Schritten wie in Beispiel 1 durchgeführt, und Kugelfalltest, Ring-auf-Ring-Test, Oberflächendruckbeanspruchung, DoL, Wärmeausdehnungskoeffizient, Glasumwandlungspunkt und Dichte werden alle wie bei Beispiel 1 gemessen.

Die meisten der unverfestigten Glasscheiben bestehen nicht den Test eines anfänglichen Aufschlags einer 132 g wiegenden Stahlkugel aus einer Höhe von 200 mm, wobei nur einige wenige brechen, wenn die Höhe 250 mm beträgt. Im Durchschnitt sind Proben, die keiner Verfestigung unterzogen wurden, in der Lage, dem Aufprall aus einer Kugelfallhöhe von etwa 200 mm standzuhalten, und die aus dem Ring-auf-Ring-Test erhaltene mittlere Bruchkraft beträgt 830 N.

Unter den gleichen Festigkeitstestbedingungen wird für die getemperten Glasproben ein unerwartetes Testergebnis erhalten. Die durchschnittliche Bruchhöhe einer 132 g wiegenden fallenden Kugel beträgt bis zu 650 mm, um einen Faktor von über 3 vergrößert im Vergleich mit den Unverfestigten. Und die durchschnittliche Ring-auf-Ring-Bruchkraft beträgt 1724N, um einen Faktor von etwa 2 vergrößert im Vergleich mit den Unverfestigten. Unter zwei Testbedingungen wurde die Festigkeit für all die besten Proben erzielt, die um das Dreifache höher ist als die der Unverfestigten.

Gleichzeitig werden an den behandelten Proben Tests der Oberflächendruckbeanspruchung und der Ionenaustauschtiefe durchgeführt. Im Fall der Behandlung bei einer Temperatur von 430°C für 2 Stunden wird für das Glas in Beispiel 2 eine mittlere Oberflächendruckbeanspruchung von 800 MPa und eine DoL von 35 Mikrometern erhalten.

Der Wärmeausdehnungskoeffizient (CTE - Thermal Expansion Coefficient) der erhaltenen Glasprobe wird gemessen. In einem Temperaturbereich von 20°C bis 300°C weist das Mehrkomponentenglas einen linearen Ausdehnungskoeffizienten von 8,6 x 10⁻⁶/°C auf.

Der Glasübergangspunkt (Tg) des erhaltenen Glases wird gemessen. Das Mehrkomponentenglas weist einen Glasübergangspunkt von etwa 605°C auf.

### Beispiel 3

In Beispiel 3 wird das Glas mit der gleichen Zusammensetzung, aber anderer Dicke (0,7 mm, 0,5 mm,0,3 mm) einer Verfestigung unter den gleichen Bedingungen unterzogen, und jeder der Tests in dem obigen Beispiel 1 und 2 wird durchgeführt. Die Ergebnisse zeigen, das sogar für ein dünneres Glas, das heißt die Dicke von 0,5 mm und 0,3 mm, das für eine kürzere Zeitperiode durchgeführte chemische Verfestigen ausreicht, um einen effektiven Verfestigungseffekt herbeizuführen, der Anwendungen in verwandten Gebieten genügt.

### Vergleichsbeispiele

Die Vergleichsbeispiele sind in Tabelle 2 aufgeführt.

Glas 1 ist ein gewöhnliches Kalknatronglas mit den Hauptkomponenten Siliziumoxid, Natriumoxid, Calciumoxid; Glas 2 ist ein Borsilikatglas mit den Hauptkomponenten Siliziumoxid, Boroxid, Natriumoxid; und Glas 3 ist ein anderes Aluminosilikatglas mit den Hauptkomponenten Siliziumoxid, Natriumoxid und Aluminiumoxid.

Bei Vergleich mit Beispielen in der vorliegenden Erfindung sind unter den gleichen Bedingungen der chemischen Verfestigung (KNO₃, 390°C, 2 Stunden) die in den Vergleichsbeispielen erhaltene Oberflächendruckbeanspruchung alle kleiner als die in Beispielen der vorliegenden Erfindung erhaltenen, wo die Komponenten des Glases in die Komponentenbereiche fallen, wie beansprucht. Außerdem weisen die Vergleichsbeispiele Nachteile dadurch auf, dass die Ionenaustauschgeschwindigkeit kleiner ist als die in den Beispielen erzielte, das heißt, die Temperatur oder die Zeitperiode für den Ionenaustausch in den Vergleichsbeispielen sollte erhöht bzw. verlängert werden, um eine DoL von 20 Mikrometern zu erhalten.

### Beispiele des antibakteriellen Experiments

### Tabelle 3 zeigt die Beispiele des antibakteriellen Experiments

Die Glasproben in den Beispielen 1 bis 3 werden verwendet und 4 Gew.-% Silbernitrat wird geschmolzenem Salz zugefügt, um das antibakterielle Glas herzustellen. Der Ionenaustausch wird 2 Stunden lang bei einer Temperatur von 390°C durchgeführt. Außerdem werden die antibakterielle Leistung, der Gehalt an Silberionen der Oberflächenschicht, die Variation der Transmissivität und die Festigkeit dieser Glascharge gemessen.

Der entsprechende antibakterielle Test wird gemäß dem in der internationalen Norm ASTM 2180-01 vorgegebenen Verfahren durchgeführt, zu den zu detektierenden Bakterien zählen: Pseudomonas aeruginosa, Staphyloccocus aureus, Aspergillus niger, Monilia albican, Escherichia coli, Salmonellen.

Der entsprechende antibakterielle Test wird gemäß dem in der National Construction Industry Standard JCT 1054-2007 vorgegebenen Verfahren, Standard of Coated Antibacterial Glass, durchgeführt, wobei zu den zu detektierenden Bakterien zählen: Escherichia coli, Staphyloccocus aureus. Falls die in Übereinstimmung mit den obigen beiden Verfahren detektierte Anzahl von Bakterien um über zwei Größenordnungen reduziert ist, wird davon ausgegangen, dass der antibakterielle Index für die Ausführungsformen der vorliegenden Erfindung erzielt worden ist.

Das Glas in den antibakteriellen Beispielen 1 bis 3 wird dem in ASTM 2180-01 beschriebenen Test unterzogen. Die Ergebnisse zeigen, dass das durch den Prozess erhaltene Glas den entsprechenden Test besteht und eine ausgezeichnete antibakterielle Funktion besitzt.

Das Rasterelektronenmikroskop und die Energiespektrumsanalyse werden zum Messen des Gewichtsprozentsatzes von Silberionen in einer Tiefe von 2 Mikrometern in der Oberflächenschicht von Glas verwendet, und der Gewichtsprozentsatz von Silberionen beträgt etwa 1%.

Ein Spektrograf LAMDA 750 wird zum Messen der Transmissivitätsvariation des Glases vor und nach dem Ionenaustausch bei einer Wellenlänge von 550 nm verwendet. Die Glasprobe weist eine Dicke von 0,7 mm auf. Vor der Verfestigung beträgt die Transmissivität 92% bei 550 nm, und nach dem Ionenaustausch ist die Transmissivität nur um etwa 1% reduziert, das heißt, die Transmissivität beträgt 91% bei 550 nm.

Die Ergebnisse des Ring-auf-Ring-Festigkeitstests und des Kugelfalltests zeigen, dass der Zusatz von Silberionen keinen Effekt auf die chemische Verfestigung ausübt und die Festigkeit des Glases als solches überhaupt nicht reduziert wird.

**Tabelle 1: Beispiele für Glaszusammensetzungen und Eigenschaften und Parameter für die chemische Verfestigung**

| | Bsp. 1 | Bsp. 2 | Bsp. 3 | | | Bsp. 4 | Bsp. 5 |
|---|---|---|---|---|---|---|---|
| SiO₂ (Gew. -%) | 63 | 61,7 | 60,7 | | | 60,7 | 61 |
| Na₂O (Gew. -%) | 13 | 12,2 | 12,6 | | | 13 | 13,2 |
| Al₂O₃ (Gew. -%) | 16 | 16,8 | 16,5 | | | 16,8 | 17 |
| MgO (Gew. -%) | 3,95 | 3,9 | 5 | | | 4,5 | 4,5 |
| K₂O (Gew. -%) | 3,55 | 4,1 | 4,2 | | | 3 | 3 |
| CaO (Gew. -%) | 0 | 0 | 0 | | | 1 | 0 |
| ZnO (Gew. -%) | 0 | 0 | 0 | | | 0,5 | 0,6 |
| ZrO₂ (Gew. -%) | 0 | 0 | 0 | | | 0 | 0 |
| SnO₂ (Gew.-%) | 0,5 | 0,4 | 0,5 | | | 0,5 | 0,5 |
| TiO₂ (Gew. -%) | 0 | 0,8 | 0,5 | | | 0 | 0,2 |
| CeO₂ (Gew. -%) | 0 | 0,1 | 0 | | | 0 | 0 |
| Na₂O + K₂O + MgO + ZnO + CaO (Gew.-%) | 20,5 | 20,2 | 21,8 | | | 22 | 21,3 |
| Glasdicke (mm) | 0,7 | 0,7 | 0,7 | 0,5 | 0,3 | 0,7 | 0,7 |
| Dichte (g/cm³) | 2,45 | 2,46 | 2,47 | 2,47 | 2,47 | 2,48 | 2,47 |
| T_{g} (°C) | 590 | 605 | 608 | 608 | 608 | 609 | 610 |
| wärmeausdehnungskoeffizient (10⁻⁶/°C) | 8,7 | 8,6 | 8,9 | 8,9 | 8,9 | 8,6 | 8,6 |
| Ionenaustauschtemperatur (°C) | 390 | 420 | 400 | 400 | 400 | 410 | 410 |
| Zeit (Stunden) | 2 | 3 | 1 | 1 | 1 | 4 | 4 |
| DoL (µm) | 20 | 35 | 15 | 15 | 15 | 22 | 20 |
| Druckbeanspruchung (MPa) | 820 | 800 | 850 | 850 | 850 | 1100 | 1050 |
| Kugelfalltest (mm) | 788 | 650 | 750 | 400 | 300 | 800 | 750 |
| Ring-auf-Ringtest (N) | 1820 | 1724 | 1925 | 908 | 650 | 1800 | 1620 |

**Tabelle 2: Beispiele für Glaszusammensetzungen und Eigenschaften und Parameter für die chemische Verfestigung**

| | Glas 1 | Glas 2 | Glas 3 |
|---|---|---|---|
| SiO₂ (Gew. -%) | 70 | 80,7 | 65,4 |
| Na₂O (Gew,-%) | 13 | 3,5 | 13,3 |
| Al₂O₃ (Gew, -%) | 2 | 2,5 | 7,7 |
| B₂O₃ (Gew, -%) | 0 | 12,7 | 1 |
| MgO (Gew, -%) | 4 | 0 | 5,1 |
| K₂O (Gew, -%) | 1 | 0, 6 | 4 |
| CaO (Gew,-%) | 10 | 0 | 0 |
| ZnO (Gew, -%) | 0 | 0 | 3 |
| ZrO₂ (Gew, -%) | 0 | 0 | 0 |
| SnO₂ (Gew, -%) | 0 | 0 | 0, 5 |
| TiO₂ (Gew, -%) | 0 | 0 | 0 |
| CeO₂ (Gew, -%) | 0 | 0 | 0 |
| Dichte (g/cm³) | 2,50 | 2,22 | 2,52 |
| T_{g} (°C) | 560 | 525 | 500 |
| Wärmeausdehnungskoeffizient (10⁻⁶/°C) | 8,9 | 3,25 | 9,0 |
| Ionenaustauschtemperatur (°C) | 390 | 390 | 390 |
| Zeit (Stunden) | 2 | 2 | 5 |
| DoL(µm) | 6 | 5 | 20 |
| Druckbeanspruchung (MPa) | 550 | 300 | 600 |
| Kugelfalltest (mm) | 350 | 300 | 400 |
| Ring-auf-Ring-Test (N) | 1150 | 940 | 1200 |

**Tabelle 3: Beispiele für antibakterielles Experiment**

| | Beispiel 1 | Beispiel 2 | Beispiel 3 |
|---|---|---|---|
| SiO₂ (gew. -%) | 63 | 61,7 | 60,7 |
| Na₂O (Gew, -%) | 13 | 12,2 | 12,6 |
| Al₂O₃ (Gew, -%) | 16 | 16,8 | 16,5 |
| MgO (Gew, -%) | 3,95 | 3,9 | 5 |
| K₂O (Gew,-%) | 3,55 | 4,1 | 4,2 |
| CaO (Gew, -%) | 0 | 0 | 0 |
| ZnO (Gew,-%) | 0 | 0 | 0 |
| ZrO₂ (Gew,-%) | 0 | 0 | 0 |
| SnO₂ (Gew, -%) | 0,5 | 0,4 | 0,5 |
| TiO₂ (Gew, -%) | 0 | 0,8 | 0,5 |
| CeO₂ (Gew,-%) | 0 | 0,1 | 0 |
| Na₂O + K₂O + MgO + ZnO + CaO (Gew,-%) | 20,5 | 20,2 | 21,8 |
| Geschmolzene Salzzusammensetzung (AgNO₃ : KNO₃ ) | 4% | 8% | 4,5% |
| Temperatur (°C) | 390 | 420 | 400 |
| Zeit (Stunden) | 2 | 3 | 1 |
| Transmissivität (T%, 550 n) | 91% | 89% | 90,5% |
| Gewichtsprozentsatz von Ag₂O in einer Tiefe von 2 Mikrometern in der Oberflächenschicht von Glas | 1% | 2% | 1,2% |
| Antibakterieller Test bestanden oder nicht bestanden (ASTM 2180-01) | Ja | | |
| Antibakterieller Test bestanden oder nicht bestanden (JCT 1054-2007) | | Ja | Ja |

## Patentansprüche

1. Aluminosilikatglas, wobei das Glas aus den folgenden Komponenten besteht, berechnet auf der Basis von Gewichtsprozent (Gew, -%):
| | |
|---|---|
| SiO₂ | 55 bis 65 |
| Na₂O | 12 < bis 17 |
| Al₂O₃ | 15 < bis 20 |
| K₂O | 2 bis 6 |
| MgO | 3,9 bis 10 |
| ZrO² | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |

2. Aluminosilikatglas nach Anspruch 1, wobei SiO₂ eine Menge von 58 bis 63 Gew,-% aufweist,

3. Aluminosilikatglas nach Anspruch 1, wobei Na₂O eine Menge von 12 > bis 15 Gew,-% aufweist,

4. Aluminosilikatglas nach Anspruch 1, wobei K₂O eine Menge von 3 bis 5 Gew,-% aufweist,

5. Aluminosilikatglas nach Anspruch 1, wobei Al₂O₃ eine Menge von 15 < bis 18 Gew,-% aufweist,

6. Aluminosilikatglas nach Anspruch 5, wobei Al₂O₃ eine Menge von 15 < bis 17 Gew,-% aufweist,

7. Aluminosilikatglas nach Anspruch 1, wobei MgO eine Menge von 3,9 bis 8,0 Gew,-% aufweist,

8. Aluminosilikatglas nach Anspruch 7, wobei MgO eine Menge von 3,9 bis 6,0 Gew,-% aufweist,

9. Aluminosilikatglas nach Anspruch 1, wobei ZnO und CaO jeweils eine Menge von unter 2 Gew,-% aufweisen,

10. Aluminosilikatglas nach Anspruch 1, wobei ZrO₂ eine Menge von 0,1 bis 3 Gew,-% aufweist,

11. Aluminosilikatglas nach Anspruch 10, wobei ZrO₂ eine Menge von 0,1 bis 2 Gew,-% aufweist,

12. Aluminosilikatglas nach Anspruch 1, wobei die Summe der Mengen von Komponenten Na₂O+K₂O+MgO+ZnO+CaO 15 bis 25 Gew,-% beträgt,

13. Verfahren zum Verfestigen eines Glases, das Folgendes umfasst: Bereitstellen des Aluminosilikatglases nach Anspruch 1 und Unterziehen einer Ionenaustauschverfestigung in einem 100% KNO₃-Salzbad, wobei eine Vorheiztemperatur im Bereich zwischen 370°C und 430°C liegt, und eine Zeitperiode für die Behandlung zwischen 0,5 und 16 Stunden beträgt,

14. Verfahren nach Anspruch 13, wobei die Temperatur im Bereich zwischen 370 und 420°C liegt und die Behandlungszeit im Bereich zwischen 0,5 und 8 Stunden liegt,

15. Verfahren nach Anspruch 13, wobei die Temperatur im Bereich zwischen 380 und 420°C liegt und die Behandlungszeit im Bereich zwischen 0,5 und 4 Stunden liegt,

16. Verfahren nach Anspruch 13, wobei die Temperatur im Bereich zwischen 390 und 410°C liegt und die Behandlungszeit im Bereich zwischen 1 bis 3 Stunden liegt,

17. Aluminosilikatglas nach Anspruch 1, wobei nach dem Ionenaustausch das Aluminosilikatglas eine Druckbeanspruchung von 600 bis 1000 MPa aufweist,

18. Aluminosilikatglas nach Anspruch 1, wobei nach dem Ionenaustausch das Aluminosilikatglas eine Tiefe der Ionenaustauschschicht (DoL) von 10 bis 80 µm aufweist,

19. Aluminosilikatglas nach Anspruch 18, wobei nach dem Ionenaustausch das Aluminosilikatglas eine DoL von 10 bis 40 µm aufweist,

20. Aluminosilikatglas nach Anspruch 19, wobei nach dem Ionenaustausch das Aluminosilikatglas eine DoL von 10 bis 30 µm aufweist,

21. Aluminosilikatglas nach Anspruch 20, wobei nach dem Ionenaustausch das Aluminosilikatglas eine DoL von 10 bis 20 µm aufweist,

22. Aluminosilikatglas nach Anspruch 1, wobei nach dem Ionenaustausch das Aluminosilikatglas mit einer Dicke von 0,3 mm einen Kugelfall-Bruchhöhen-Festigkeitsversuch von 200 bis 400 mm und eine Ring-auf-Ring-Bruchkraft von 400 bis 1000 N aufweist,

23. Aluminosilikatglas nach Anspruch 1, wobei nach dem Ionenaustausch das Aluminosilikatglas mit einer Dicke von 0,5 mm einen Kugelfall-Bruchhöhen-Festigkeitsversuch von 300 bis 500 mm und eine Ring-auf-Ring-Bruchkraft von 500 bis 1200 N aufweist,

24. Aluminosilikatglas nach Anspruch 1, wobei nach dem Ionenaustausch das Aluminosilikatglas mit einer Dicke von 0,7 mm einen Kugelfall-Bruchhöhen-Festigkeitsversuch von 400 bis 1000 N und eine Ring-auf-Ring-Bruchkraft von 1000 bis 4000 N aufweist,

25. Aluminosilikatglas nach Anspruch 1, wobei nach dem Ionenaustausch eine zentrale Spannung unter 60 MPa liegt,

26. Aluminosilikatglas nach Anspruch 25, wobei nach dem Ionenaustausch eine zentrale Spannung unter 30 MPa liegt,

27. Aluminosilikatglas, wobei die Glasplatte aus den folgenden Komponenten besteht, berechnet auf der Basis von Gewichtsprozent (ges,-%):
| | |
|---|---|
| SiO₂ | 55 bis 65 |
| Na₂O | 12 < bis 17 |
| Al₂O₃ | 15 < bis 20 |
| K₂O | 2 bis 6 |
| MgO | 3,9 bis 10 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |

28. Aluminosilikatglasplatte nach Anspruch 27, wobei SiO₂ eine Menge von 58 bis 63 Gew,-% aufweist,

29. Aluminosilikatglasplatte nach Anspruch 27, wobei Na₂O eine Menge von 12 < bis 15 Gew,-% aufweist,

30. Aluminosilikatglasplatte nach Anspruch 27, wobei K₂O eine Menge von 3 bis 5 Gew,-% aufweist,

31. Aluminosilikatglasplatte nach Anspruch 27, wobei Al₂O₃ eine Menge von 15 < bis 18 Gew,-% aufweist,

32. Aluminosilikatglasplatte nach Anspruch 27, wobei Al₂O₃ eine Menge von 15 < bis 17 Gew,-% aufweist,

33. Aluminosilikatglasplatte nach Anspruch 27, wobei MgO eine Menge von 3,9 bis 8,0 Gew,-% aufweist,

34. Aluminosilikatglasplatte nach Anspruch 27, wobei MgO eine Menge von 3,9 bis 6,0 Gew,-% aufweist,

35. Aluminosilikatglasplatte nach Anspruch 27, wobei ZnO und CaO jeweils eine Menge von unter 2 Gew,-% aufweisen,

36. Aluminosilikatglasplatte nach Anspruch 27, wobei ZrO₂ eine Menge von 0,1 bis 3 Gew,-% aufweist,

37. Aluminosilikatglasplatte nach Anspruch 36, wobei ZrO₂ eine Menge von 0,1 bis 2 Gew,-% aufweist,

38. Aluminosilikatglasplatte nach Anspruch 27, wobei die Summe der Mengen von Komponenten Na₂O+K₂O+MgO+ZnO+CaO 15 bis 25 Gew,-% beträgt,

39. Verfahren zum Verfestigen einer Glasplatte, das Folgendes umfasst: Bereitstellen der Aluminosilikatglasplatte nach Anspruch 27 und Unterziehen einer Ionenaustauschverfestigung in einem 100% KNO₃-Salzbad, wobei eine Vorheiztemperatur im Bereich zwischen 370°C und 430°C liegt, und eine Zeitperiode für die Behandlung zwischen 0,5 und 16 Stunden beträgt,

40. Verfahren nach Anspruch 39, wobei die Temperatur im Bereich zwischen 370 und 420°C liegt und die Behandlungszeit im Bereich zwischen 0,5 und 8 Stunden liegt,

41. Verfahren nach Anspruch 39, wobei die Temperatur im Bereich zwischen 380 und 420°C liegt und die Behandlungszeit im Bereich zwischen 0,5 und 4 Stunden liegt,

42. Verfahren nach Anspruch 39, wobei die Temperatur im Bereich zwischen 390 und 410°C liegt und die Behandlungszeit im Bereich zwischen 1 bis 3 Stunden liegt,

43. Aluminosilikatglasplatte nach Anspruch 27, wobei nach dem Ionenaustausch die Aluminosilikatglasplatte eine Druckbeanspruchung von 600 bis 1000 MPa aufweist,

44. Aluminosilikatglasplatte nach Anspruch 27, wobei nach dem Ionenaustausch die Aluminosilikatglasplatte eine Tiefe der Ionenaustauschschicht (DoL) von 10 bis 80 µm aufweist,

45. Aluminosilikatglasplatte nach Anspruch 44, wobei nach dem Ionenaustausch die Aluminosilikatglasplatte eine DoL von 10 bis 40 µm aufweist,

46. Aluminosilikatglasplatte nach Anspruch 45, wobei nach dem Ionenaustausch die Aluminosilikatglasplatte eine DoL von 10 bis 30 µm aufweist,

47. Aluminosilikatglasplatte nach Anspruch 46, wobei nach dem Ionenaustausch die Aluminosilikatglasplatte eine DoL von 10 bis 20 µm aufweist,

48. Aluminosilikatglasplatte nach Anspruch 27, wobei nach dem Ionenaustausch die Aluminosilikatglasplatte mit einer Dicke von 0,3 mm einen Kugelfall-Bruchhöhen-Festigkeitsversuch von 200 bis 400 mm und eine Ring-auf-Ring-Bruchkraft von 400 bis 1000 N aufweist,

49. Aluminosilikatglasplatte nach Anspruch 27, wobei nach dem Ionenaustausch die Aluminosilikatglasplatte mit einer Dicke von 0,5 mm einen Kugelfall-Bruchhöhen-Festigkeitsversuch von 300 bis 500 mm und eine Ring-auf-Ring-Bruchkraft von 500 bis 1200 N aufweist,

50. Aluminosilikatglasplatte nach Anspruch 27, wobei nach dem Ionenaustausch die Aluminosilikatglasplatte mit einer Dicke von 0,7 mm einen Kugelfall-Bruchhöhen-Festigkeitsversuch von 400 bis 1000 N und eine Ring-auf-Ring-Bruchkraft von 1000 bis 4000 N aufweist,

51. Aluminosilikatglasplatte nach Anspruch 27, wobei nach dem Ionenaustausch eine zentrale Spannung unter 60 MPa liegt,

52. Aluminosilikatglasplatte nach Anspruch 51, wobei nach dem Ionenaustausch eine zentrale Spannung unter 30 MPa liegt,

53. Aluminosilikatglas nach Anspruch 1 oder die Aluminosilikatglasplatte nach Anspruch 27, das/die durch Floaten hergestellt wird,

54. Aluminosilikatglas nach Anspruch 1 oder die Aluminosilikatglasplatte nach Anspruch 27, wobei das durch Floaten hergestellte Aluminosilikatglas oder die durch Floaten hergestellte Aluminosilikatglasplatte eine Dicke von 0,5 mm bis 20 mm aufweist,

55. Aluminosilikatglas nach Anspruch 1 oder die Aluminosilikatglasplatte nach Anspruch 27, das/die durch einen Tiefziehprozess hergestellt wird,

56. Aluminosilikatglas oder Aluminosilikatglasplatte, durch einen Tiefziehprozess nach Anspruch 55 hergestellt, wobei ein Verfeinerungsmittel ausgewählt aus der Gruppe bestehend aus Arsentrioxid, Antimontrioxid, Sulfat, Nitrat, Fluorid oder Chlorid verwendet wird,

57. Aluminosilikatglas nach Anspruch 1 oder die Aluminosilikatglasplatte nach Anspruch 27, wobei das durch Floaten hergestellte Aluminosilikatglas oder die durch Floaten hergestellte Aluminosilikatglasplatte eine Dicke von 0,1 mm bis 1,5 mm aufweist,

58. Aluminosilikatglas nach Anspruch 1 oder die Aluminosilikatglasplatte nach Anspruch 27, die als ein Touchscreen verwendet wird,

59. Verwendung des Aluminosilikatglas-Touchscreens nach Anspruch 58 für mobile Elektronikeinrichtungen,

60. Mobile Elektronikeinrichtung, wobei die mobile Elektronikeinrichtung eine Aluminosilikatglas-Deckplatte umfasst, die aus den folgenden Komponenten besteht, berechnet auf der Basis von Gewichtsprozent (Gew, -%):
| | |
|---|---|
| SiO₂ | 55 bis 65 |
| Na₂O | 12 < bis 17 |
| Al₂O₃ | 15 < bis 20 |
| K₂O | 2 bis 6 |
| MgO | 3,9 bis 10 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |

61. Prozess zum Herstellen einer antibakteriellen und verfestigten Aluminosilikatglasplatte, umfassend das Bereitstellen einer Aluminosilikatglasplatte nach Anspruch 24 und Zusetzen von Silbernitrat zu einem geschmolzenen Nitratsalz während der chemischen Verfestigung des Glases,

62. Verfahren nach Anspruch 61, wobei Silbernitrat dem KNO₃-Salzbad mit einem Gewichtsprozentsatz von 0,1 bis 15% auf der Basis des Gesamtgewichts des geschmolzenen Salzes zugesetzt wird,

63. Verfahren nach Anspruch 62, wobei Silbernitrat dem KNO₃-Salzbad mit einem Gewichtsprozentsatz von 0,1 bis 10% auf der Basis des Gesamtgewichts des geschmolzenen Salzes zugesetzt wird,

64. Verfahren nach Anspruch 63, wobei Silbernitrat dem KNO₃-Salzbad mit einem Gewichtsprozentsatz von 0,1 bis 5% auf der Basis des Gesamtgewichts des geschmolzenen Salzes zugesetzt wird,

65. Antibakterielles und getempertes Aluminosilikatglas für einen Touchscreen, wobei das Glas aus den folgenden Komponenten besteht, berechnet auf der Basis von Gewichtsprozent (Gew,-%):
| | |
|---|---|
| SiO₂ | 55 bis 65 |
| Na₂O | 12 < bis 17 |
| Al₂O₃ | 15 < bis 20 |
| K₂O | 2 bis 6 |
| MgO | 3,9 bis 10 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |
wobei während der chemischen Verfestigung des Glases Silbernitrat dem geschmolzenen Nitratsalz zugesetzt wird und das Glas nachdem es einem Ionenaustausch unterzogen wurde mindestens eine der folgenden Eigenschaften aufweist
- eine DoL von 10 bis 80 µm;
- eine zentrale Spannung unter 60 MPa;
- eine Druckbeanspruchung von 600 bis 1000 MPa;
- ein Glas von 0,3 mm Dicke mit einem Kugelfall-Bruchhöhen-Festigkeitsversuch von 200 bis 400 mm und einer Ring-auf-Ring-Bruchkraft von 400 bis 1000 N;
- ein Glas von 0,5 mm Dicke mit einem Kugelfall-Bruchhöhen-Festigkeitsversuch von 300 bis 500 mm und einer Ring-auf-Ring-Bruchkraft von 500 bis 1200 N;
- ein Glas von 0,7 mm Dicke mit einem Kugelfall-Bruchhöhen-Festigkeitsversuch von 400 bis 1000 mm und einer Ring-auf-Ring-Bruchkraft von 1000 bis 4000 N; und
- eine antibakterielle Funktion,

66. Antibakterielles und verfestigtes Aluminosilikatglas als ein Touchscreen nach Anspruch 65, welcher einer Ionenaustauschverfestigung in einem 100% KNO₃-Salzbad unterzogen wird, wobei die Vorheiztemperatur im Bereich von 370°C bis 430°C liegt und die Zeitperiode für die Behandlung zwischen 0,5 und 16 Stunden liegt,

67. Antibakterielles und verfestigtes Aluminosilikatglas als ein Touchscreen nach Anspruch 66, welcher einer Ionenaustauschverfestigung in einem 100% KNO₃-Salzbad unterzogen wird, wobei die Vorheiztemperatur im Bereich von 370°C bis 420°C liegt und die Zeitperiode für die Behandlung zwischen 0,5 und 8 Stunden liegt,

68. Antibakterielles und verfestigtes Aluminosilikatglas als ein Touchscreen nach Anspruch 67, welcher einer Ionenaustauschverfestigung in einem 100% KNO₃-Salzbad unterzogen wird, wobei die Vorheiztemperatur im Bereich von 380°C bis 420°C liegt und die Zeitperiode für die Behandlung zwischen 0,5 und 4 Stunden liegt,

69. Antibakterielles und verfestigtes Aluminosilikatglas als ein Touchscreen nach Anspruch 68, welcher einer Ionenaustauschverfestigung in einem 100% KNO₃-Salzbad unterzogen wird, wobei die Vorheiztemperatur im Bereich von 390°C bis 410°C liegt und die Zeitperiode für die Behandlung zwischen 1 und 3 Stunden liegt,

70. Antibakterielles und verfestigtes Aluminosilikatglas als ein Touchscreen nach Anspruch 65, wobei Silbernitrat dem KNO₃-Salzbad mit einem Gewichtsprozentsatz von 0,1 bis 15% auf der Basis des Gesamtgewichts des geschmolzenen Salzes zugesetzt wird,

71. Antibakterielles und verfestigtes Aluminosilikatglas als ein Touchscreen nach Anspruch 70, wobei Silbernitrat dem KNO₃-Salzbad mit einem Gewichtsprozentsatz von 0,1 bis 10% auf der Basis des Gesamtgewichts des geschmolzenen Salzes zugesetzt wird,

72. Antibakterielles und verfestigtes Aluminosilikatglas als ein Touchscreen nach Anspruch 71, wobei Silbernitrat dem KNO₃-Salzbad mit einem Gewichtsprozentsatz von 0,1 bis 5% auf der Basis des Gesamtgewichts des geschmolzenen Salzes zugesetzt wird,

73. Aluminosilikatglas, wobei das Glas aus den folgenden Komponenten besteht, berechnet auf der Basis von Gewichtsprozent (Gew, -%) :
| | |
|---|---|
| SiO₂ | 56 bis 64 |
| Na₂O | 12,1 bis 16,5 |
| Al₂O₃ | 15,1 bis 19,0 |
| K₂O | 2,5 bis 5,5 |
| MgO | 3,9 bis 9,0 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |

74. Aluminosilikatglas, wobei das Glas aus den folgenden Komponenten besteht, berechnet auf der Basis von Gewichtsprozent (Gew,-%):
| | |
|---|---|
| SiO₂ | 57 bis 63 |
| Na₂O | 12,1 bis 16,0 |
| Al₂O₃ | 15,1 bis 18,5 |
| K₂O | 2, 8 bis 5, 0 |
| MgO | 4,0 bis 9,0 |
| ZrO₂ | 0 bis 5 |
| ZnO | 0 bis 4 |
| CaO | 0 bis 4 |
| Na₂O + K₂O + MgO + ZnO + CaO | 15 bis 28 |
| SnO₂ | 0 bis 1 |
| TiO₂ + CeO₂ | ≤ 1 |
